# EUROPÄISCHE PATENTSCHRIFT

(11) **EP 3 837 060 B1**
(45) Veröffentlichungstag und Bekanntmachung des Hinweises auf die Patenterteilung: **14.02.2024**
(21) Anmeldenummer: 19752703.9
(22) Anmeldetag: 12.08.2019
(51) Int. Cl.: B05B 12/08, B05B 12/00, B05B 12/02, F16K 31/06, F16K 17/04, F16K 31/12, F16K 31/02, G05D 7/00

(54) **AGRARSPRITZEN-VENTILEINHEIT UND AGRARSPRITZEN-VENTILEINRICHTUNG**
AGRICULTURAL SPRAYING VALVE UNIT AND AGRICULTURAL SPRAYING VALVE DEVICE
UNITÉ DE SOUPAPE DE PULVÉRISATION AGRICOLE ET DISPOSITIF DE SOUPAPE DE PULVÉRISATION AGRICOLE

(30) Priorität: 17.08.2018 EP 18189451
(43) Veröffentlichungstag der Anmeldung: 23.06.2021
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER
(86) Internationale Anmeldenummer: PCT/EP2019/071573
(87) Internationale Veröffentlichungsnummer: WO 2020/035443

(56) Entgegenhaltungen:
- EP-A1- 2 165 770
- EP-B1- 2 979 765
- DE-A1-102010 001 881
- DE-B3-102011 000 921
- GB-A- 2 337 984
- US-A1- 2006 086 823

## Beschreibung

### TECHNISCHES GEBIET DER ERFINDUNG

Die vorliegende Erfindung betrifft eine Agrarspritzen-Ventileinheit und eine mit einer derartigen Agrarspritzen-Ventileinheit gebildete Agrarspritzen-Ventileinrichtung.

Agrarspritzen-Ventileinheiten und Agrarspritzen-Ventileinrichtungen dienen der Steuerung oder Regelung (im Rahmen der vorliegenden Erfindung auch unter "Steuerung" subsumiert) der Ausbringung eines Fluids mittels einer Agrarspritze beliebigen Einsatzzwecks und beliebiger Bauart. Beispielsweise dient eine derartige Agrarspritze dem Ausbringen eines Fluids in der Landwirtschaft oder dem Obst- oder Gemüseanbau, wobei es sich bei dem Fluid beispielsweise um Wasser, Dünger, eine Insektizid, ein Unkrautvernichtungsmittel oder ein beliebiges anderes Fluid oder Fluidgemisch handeln kann.

### STAND DER TECHNIK

Agrarspritzen finden Einsatz einzeln zur Ausbringung eines agraren Fluids auf eine begrenzte Fläche oder mit einer Vielzahl von Agrarspritzen, die beispielsweise nebeneinander an einem oder mehreren Sprühbalken gehalten sein können. Insbesondere aus Kostengründen sowie ökologischen Gründen soll das Ausbringen des Fluids nur in den tatsächlich relevanten agraren Flächen und auch hier nur mit einem erforderlichen Volumenstrom erfolgen. Um lediglich ein Beispiel zu nennen, soll bei einem Sprühfahrzeug, welches sich mäanderförmig über ein Feld bewegt, die Ausbringung des Fluids in den Randbereichen des Feldes, beispielsweise bei einer Kurvenfahrt, unterbrochen werden. Möglich ist auch, dass in Teilbreiten des Sprühbalkens, die keine Pflanzen oder kein Erntegut überfahren, die diesen Teilbreiten zugeordneten Agrarspritzen temporär abgeschaltet werden sollen. Während für die vollständige Abschaltung in dem Randbereich eines Feldes eine zentrale Agrarspritzen-Ventileinheit in einer Zuführleitung zu sämtlichen Agrarspritzen in eine Sperrstellung verbracht werden kann, erfordert die Deaktivierung von Teilbreiten eines Sprühbalkens, das eine Zentralleitung des Sprühbalkens, an welche die Agrarspritzen angeschlossen sind, segmentiert ausgebildet ist mit parallelen Segmenten, die separat über den jeweiligen Segmenten zugeordnete Agrarspritzen-Ventileinheiten absperrbar sind. Schließlich kann eine Ansteuerung einer Agrarspritzen-Ventileinheit auch zusätzlich zu einer Öffnungsstellung und einer Schließstellung in zumindest eine Zwischenstellung, insbesondere kontinuierliche Zwischenstellungen, erfolgen, um bedarfsgerecht die Ausbringung steuern zu können.

Mit modernen Agrarspritzen verbundene Problemstellungen sowie Lösungsansätze sind den Druckschriften DE 10 2009 001 532 A1 sowie DE 696 25 914 T2 zu entnehmen. Demgemäß kann eine Veränderung einer Ausbringrate mit erforderlichen Zwischenstellungen der Agrarspritzen-Ventileinheit wünschenswert sein je nach agrarem Einsatzzweck, einer erwarteten Drift von Sprühtropfen in Folge eines Windes, der Geschwindigkeit des Sprühfahrzeugs, der gewünschten Größe des Sprühbereichs der Agrarspritze, der Höhe eines Sprühbalkens über dem Boden, einer gewünschten Tropfengröße oder einem gewünschten Spektrum der Tropfengrößen, dem gewünschten fluidischen Fluss, einem gewünschten Winkel eines Sprühkegels u. ä. Möglich ist auch, dass eine Steuerung der Ausbringrate auf Grundlage von Informationen eines Global-Positioning-Systems erfolgen soll, indem beispielsweise je nach Position auf dem Feld der Volumenstrom der Ausbringung vorgegeben ist, beispielsweise auf Grundlage von positionsbezogenen Erntedaten der letzten Ernte.

Bekannt ist auch eine Beeinflussung eines Volumenstroms für die Ausbringung des agraren Fluids über eine Steuerung der Förderleistung einer Pumpe für die Zuführung des Fluids, eine Steuerung des Druckes in einer Zuführleitung, eine Beeinflussung eines Öffnungs-Querschnitts einer Agrarspritzen-Ventileinheit oder einen Einsatz einer Agrarspritzen-Ventileinheit in Ausbildung als pulsmoduliertes System (vgl. DE 10 2009 001 532 A1 und DE 696 25 914 T2), wobei im letztgenannten Fall über den sogenannten "Duty Cycle" und das Verhältnis der kurzfristigen Öffnungszeiten des Ventils zu Schließzeiten des Ventils der zeitlich gemittelte Volumenstrom variiert werden kann. Eine Wechselwirkung der Ausbringung besteht auch zwischen der Agrarspritzen-Ventileinheit einerseits und einer der Agrarspritzen-Ventileinheit nach geschalteten Spritz- oder Düseneinheit, aus welcher das Fluid in Richtung des Ackerbodens oder des mit dem Fluid zu benetzenden Guts austritt.

Agrarspritzen-Ventileinheiten können als direkt gesteuerte Magnetventile ausgebildet sein, bei welchen beispielsweise ein als Ventilteller ausgebildeter Ventilkörper, der in einer Schließstellung zur Anlage an einen Ventilsitz kommt, mit einem elektromagnetischen Aktuator direkt mechanisch verbunden ist. Hierbei sind die elektromagnetischen Aktuatoren mit einer Spule und einem im Inneren der Spule bewegten Anker gebildet, wobei der bewegliche Anker mit dem Ventilkörper gekoppelt ist. Der elektromagnetische Aktuator muss eine Öffnungskraft erzeugen, die abhängig ist von der Größe des Ventiltellers sowie der Druckdifferenz zwischen einer Primärleitung und einer Sekundärleitung der Agrarspritzen-Ventileinheit (vgl. DE 10 2013 101 460 A1).

DE 10 2011 000 921 B3 offenbart eine Agrarspritzen-Ventileinheit, welche als passives Überströmventil ohne elektronische Steuerungsmöglichkeiten ausgebildet ist. Hierbei ist die Größe und Geometrie eines Übertrittsquerschnitts zwischen der Primärleitung und der Sekundärleitung abhängig von der Stellung eines Ventilkörpers. Der Ventilkörper ist in diesem Fall mit einem Wiegekolben gebildet. Der Wiegekolben weist eine erste Kolbenfläche auf, die permanent mit dem Druck in der Primärleitung beaufschlagt ist. Des Weiteren besitzt der Wiegekolben eine entgegengesetzt zu der ersten Kolbenfläche wirkende zweite Kolbenfläche, welche permanent mit dem Druck in Sekundärleitung beaufschlagt ist. Somit ist die Stellung des Ventilkörpers und die Größe und Geometrie des Übertrittquerschnitts von der Druckdifferenz in der Primärleitung und der Sekundärleitung abhängig. Für die Inbetriebnahme einer Agrarspritze liegt in der Sekundärleitung kein Druck an, so dass sich mit einem Druckaufbau in der Primärleitung eine schnelle Öffnung der Agrarspritzen-Ventileinheit ergibt. Kommt es hingegen im Betrieb der Agrarspritze zu einer unerwünschten Verstopfung stromabwärts der Agrarspritzen-Ventileinheit, staut sich das Fluid in der Sekundärleitung auf, womit der die zweite Kolbenfläche beaufschlagende Druck sich dem Druck in der Primärleitung, welcher die erste Kolbenfläche beaufschlagt, annähert. Auf diese Weise kann bei einer Verstopfung automatisch eine Schließung des Agrarspritzen-Überströmventils herbeigeführt werden, um einen weiteren Übertritt von Fluid von der Primärleitung in die Sekundärleitung zu unterbinden.

EP 2 227 949 A1 offenbart den grundsätzlichen Aufbau einer Feldspritzanlage mit dem gesamten fluidischen Kreis und der Anordnung mehrerer Agrarspritzen-Ventileinheiten an einem Sprühbalken. Hier finden Agrarspritzen-Ventileinheiten mit einer pulsweitenmodulierten Steuerung der Bewegung eines Ventilkörpers Einsatz.

EP 2 979 765 B1 offenbart eine Agrarspritzen-Ventileinheit, bei welcher zwischen einer Primär_ leitung und einer Sekundärleitung ein Ventil angeordnet ist. Das Ventil weist einen Ventilkörper und einen Ventilsitz auf, die in einer Öffnungsstellung des Ventils einen Übertrittsquerschnitt zwischen der Primärleitung und der Sekundärleitung bilden. Der Ventilkörper ist über eine Feder in Richtung einer Schließstellung und in Richtung des Ventilsitzes beaufschlagt. Auf den Ventilkörper wirkt der Druck in der Primärleitung in Öffnungsrichtung. Das Ventil bildet ein Überströmventil, in dem mit einem Überschreiten eines Schwellwerts des Drucks in der Primärleitung der Ventilkörper von dem Ventilsitz weg bewegt wird. Somit wird das Ventil erst geöffnet, wenn mit Aufnahme der Tätigkeit einer Pumpe der Schwellwert des Drucks erreicht ist. Neben dieser passiven Überströmfunktion des Ventils kann der Ventilkörper über einen Haftmagneten in der Schließstellung gehalten werden. Hierbei wird unter einem Haftmagneten ein Elektromagnet verstanden, in welchem keine mechanische Bewegungsumsetzung erfolgt. Vielmehr verfügt der elektrische Haftmagnet über eine Spulenwicklung und einen gegenüber der Spulenwicklung nicht bewegbaren Kern. In der Richtlinie VDE 0580 sind derartige Haftmagnete auch als "Lasthebemagnete" bezeichnet. Einsatz findet hier ein Haftmagnet in Ausbildung als rotationssymmetrischer Topfmagnet. Ein Halten des Ventils mittels des Haftmagneten ist mit einer drastisch reduzierten Leistungsaufnahme gegenüber einem Elektromagneten mit im Inneren angeordneten beweglichen Anker möglich, wobei unter Umständen dennoch hohe Haltekräfte herbeigeführt werden können. Wird mittels des Haftmagneten der Ventilkörper in der Schließstellung gehalten, kann durch den Haftmagneten die Überstromfunktion außer Kraft gesetzt werden, so dass trotz Überschreiten des Schwellwerts des Drucks in der Primärleitung das Ventil die Schließstellung beibehält. Dies soll beispielsweise genutzt werden, um durch Bestromung einzelner Haftmagnete von mehreren Agrarspritzen-Ventileinheiten an einem Sprühbalken eine teilbereiten Abschaltung herbeizuführen oder mit Bestromung sämtlicher Haftmagneten der Agrarspritzen-Ventileinheit temporär das Ausbringen für den gesamten Sprühbalken, beispielsweise bei einer Kurvenfahrt im Randbereich des Feldes, zu unterbinden. Alternativ wird vorgeschlagen, dass der Haftmagnet eine Öffnungsstellung des Ventilkörpers sichert, womit die Überstromfunktion mit Bestromung des Haftmagneten auch ausgelöst werden kann, wenn die Druckdifferenz zwischen dem Druck in der Primärleitung und der Sekundärleitung nicht ausreichend ist, um das Ventil in die Öffnungsstellung zu überführen. Wirkt der Haftmagnet mit einem Anker zusammen, der mit dem Ventilkörper gekoppelt ist, ändert sich je nach Stellung des Ventilkörpers und damit des Abstandes des Ankers von dem Haftmagneten die magnetische Leitfähigkeit, der magnetische Widerstand und die Flussdichte. Bei Beaufschlagung des Haftmagneten mit einer Wechselspannung oder einem Wechselstrom ändern sich damit die Stromverläufe, die Spannung, die Impedanz und/oder eine Phasenverschiebung der elektrischen Beaufschlagung des Haftmagneten. Anhand der physikalischen Gegebenheiten kann dann eine Veränderung umgerechnet werden oder über ein Kennfeld umgewandelt werden in einen Abstand des Ankers von dem Haftmagneten, womit eine Art Sensor geschaffen ist für die Betriebsstellung des Ventilkörpers und damit die Betriebsstellung des Ventils. Hierbei kann der Sensor ein binäres Signal (geschlossen/offen), ein digitales Signal oder auch ein analoges Signal für den Abstand des Ankers von dem Haftmagneten erzeugen. Auf Grundlage der Auswertung des derart ermittelten Abstandes des Ankers von dem Haftmagneten kann dann eine Erkennung eines fehlerhaften Betriebszustandes der Agrarspritze, für welche das Ventil Einsatz findet, erfolgen. Beispielsweise kann ein Einbruch des Drucks in der Primärleitung (insbesondere infolge einer Fehlfunktion einer Pumpe oder einer Leckage in der Zuleitung) detektiert werden. Möglich ist auch, dass über den Sensor eine Verstopfung in der Agrarspritze, insbesondere im Bereich der Sekundärleitung oder im Bereich einer Spritz- oder Ausbringdüse, erkannt wird. Möglich ist auch, dass eine Behinderung einer Bewegung des Ventilkörpers, beispielsweise infolge eines Verschleißes oder eines Fremdkörpers im Führungsbereich des Ventilkörpers oder zwischen dem Ventilsitz und dem Ventilkörper, erkannt wird. Vorgeschlagen wird in EP 2 979 765 B1 des Weiteren, dass ein nicht stationäres elektrisches Testsignal erzeugt wird, mit dem der Haftmagnet beaufschlagt wird, wobei das Testsignal so von einer Steuereinheit vorgegeben wird, dass eine möglichst gute Messung des Abstandes des Ankers von dem Haftmagneten möglich ist. Dieses elektrische Testsignal kann beispielsweise in der Haftstellung des Ankers appliziert werden, in welcher der Anker ohnehin mit einer verhältnismäßig großen Haltekraft an dem Haftmagneten gehalten ist, so dass eine kleine oszillierende Kraft infolge des elektrischen Testsignals nicht so an dem Lösen des Ankers von dem Haftmagneten führt. Möglich ist auch, dass das Testsignal dem ansonsten genutzten elektrischen Beaufschlagungssignal des Haftmagneten überlagert wird, wobei die Amplitude des elektrischen Testsignals kleiner ist als die des elektrischen Beaufschlagungssignals. Alternativ oder zusätzlich wird vorgeschlagen, dass das Testsignal eine derartige Frequenz besitzt, dass zwar das Testsignal einen Fluss durch den Haftmagneten und den Anker bewirkt, welcher abhängig ist von dem Abstand des Ankers von dem Haftmagneten. Allerdings ist infolge der Trägheit des Ankers und des Ventilkörpers das Ventil nicht in der Lage, entsprechend dem hochfrequenten Testsignal und der hierdurch erzeugten hochfrequenten Kraft des Haftmagneten eine signifikante Änderung oder Oszillation der Stellung des Ventilkörpers herbeizuführen.

WO 2017/223252 A1 offenbart ein Agrarspritzensystem mit mehreren verteilt über einen Balken angeordneten Agrarspritzen-Ventileinheiten. Der gesamte Fluss des agraren Fluids durch die Agrarspritzen-Ventileinheiten wird mittels eines zentralen pulsweitenmodulierten Ventils gesteuert, welches auf Grundlage der Vorgaben an einer Bedienoberfläche, auf Grundlage von Karteninformationen, auf Grundlage eines Durchflussmessers und auf Grundlage eines Druckmessers gesteuert wird. Mehrere Agrarspritzen-Ventile können zusammengefasst sein zu einer Agrarspritzen-Ventileinheit. In dieser Agrarspritzen-Ventileinheit findet dann ein für eine Teilbreite zuständiges, elektronisch steuerbares Steuerventil Einsatz, welches den vorbestimmten kumulierten Gesamtfluss bereitstellt für mehrere nebeneinander angeordnete Ausbringdüsen. Den Ausbringdüsen sind dann federbeaufschlagte Rückschlagventile vorgeordnet. Ein Steuerventil kann für eine unterschiedliche Zahl von Baugruppen mit einer Kombination eines Rückschlagventils und einer Ausbringdüse zuständig sein, wobei auch möglich ist, dass das Steuerventil lediglich über ein einziges Rückschlagventil mit einer zugeordneten Ausbringdüse verbunden ist.

Die Druckschrift GB 2 337 984 A offenbart ein Agrarspritzensystem, bei dem ein Vorratsbehälter für eine chemische Substanz über ein Sperrventil eine Förderpumpe versorgt. Die Förderpumpe ist über ein Leitungssystem mit einem pulsweitenmodulierten Steuerventil und ein stromabwärts des Steuerventils angeordnetes Rückschlagventil mit einer Zusammenführung verbunden, der über einen parallelen Leitungszweig Wasser zugeführt wird, welches mit der chemischen Flüssigkeit gemischt werden soll. Die Zusammenführung ist dann mit einer Ausbringleitung verbunden, die mit einer Agrarspritze verbunden ist, über die die gemischte Flüssigkeit ausgebracht wird.

Weiterer Stand der Technik ist aus DE 10 2010 001 881 A1, US 2006/086 823 A1 und EP 2 165 770 A1 bekannt.

### AUFGABE DER ERFINDUNG

Der Erfindung liegt die Aufgabe zugrunde, eine Agrarspritzen-Ventileinheit und eine Agrarspritzen-Ventileinrichtung vorzuschlagen, welche hinsichtlich
- der Betriebssicherheit,
- eines Tropfschutzes,
- der Möglichkeit einer Erkennung einer Verstopfung und/oder
- einer Erfassung eines Durchflusses
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Agrarspritzen-Ventileinheit, bei der eine Primärleitung und eine Sekundärleitung über ein elektronisch gesteuertes Steuerventil miteinander verbunden sind. In dem elektronisch gesteuerten Steuerventil kann eine Ventilstellung (insbesondere eine Öffnungsstellung oder eine Schließstellung) über einen Haftmagneten aufrechterhalten werden und/oder verändert werden.

Erfindungsgemäß ist (zusätzlich zu dem elektronisch gesteuerten Steuerventil) in der Agrarspritzen-Ventileinheit ein Überströmventil angeordnet. Hierbei ist das Überströmventil ein passives Überströmventil, so dass dessen Ventilstellung nicht durch elektronische Beaufschlagung verändert ist und/oder die Ventilstellung des Überströmventils ausschließlich von dem an diesem wirkenden fluidischen Drücken und etwaigen hierauf wirkenden Federn abhängig ist.

Das elektronisch gesteuerte Steuerventil und das passive Überströmventil sind in einer Reihenschaltung zwischen der Primärleitung und der Sekundärleitung angeordnet, so dass der Durchfluss von der Primärleitung zu der Sekundärleitung somit sowohl von der Stellung des elektronisch gesteuerten Steuerventils als auch von der Stellung des passiven Überströmventils abhängig ist. Hierbei kann das passive Überströmventil dem elektronisch gesteuerten Steuerventil vor- oder nachgeordnet sein.

Erfindungsgemäß erfolgt somit eine Steuerung der Funktionen einerseits mittels der elektronischen Steuerung, welche über das elektronisch gesteuerte Steuerventil gewährleistet wird, und andererseits mittels der Überströmfunktion, welche durch das passive Überströmventil gewährleistet wird. Somit kann durch die Auslegung einerseits des Steuerventils und andererseits des Überströmventils jeweils spezifisch den jeweiligen Anforderungen Rechnung getragen werden, ohne dass eine gegenseitige Beeinflussung erfolgt. Insbesondere kann für das Überströmventil unabhängig von der Auslegung des Steuerventils die Vorgabe des Schwellwerts des Drucks in der Primärleitung, für welche eine passive Öffnung des Überströmventils erfolgt, erfolgen. Das passive Überströmventil gewährleistet zuverlässig, dass vor dem Erreichen des Schwellwertes, für welchen das Überströmventil öffnet, Fluid durch die Agrarspritzen-Ventileinheit strömt, womit sehr zuverlässig ein Tropfschutz gewährleistet ist. Das Überströmventil ist vorzugswiese ein Überströmventil, welches keine Rückströmung ermöglicht und/oder welches von der Primärleitung in Richtung der Sekundärleitung öffnet. Die konstruktive Ausgestaltung des Überströmventils kann dabei beliebig sein. Um lediglich einige die Erfindung nicht beschränkende Beispiele zu nennen, kann das Überströmventil als als Sitzventil, als Membranventil u. ä. ausgebildet sein.

Das im Rahmen der Erfindung eingesetzte Überströmventil kann eine beliebige Öffnungscharakteristik aufweisen. Erfindungsgemäß wirkt dabei der Druck in der Primärleitung in einer Schließstellung des Überströmventils auf eine kleinere Ventilfläche als in einer Öffnungsstellung des Überströmventils. Anders gesagt wird in der Schließstellung des Überströmventils eine kleinere Öffnungskraft auf einen Ventilkörper des Überströmventils ausgeübt als in einer Öffnungsstellung des Überströmventils, wenn derselbe Druck in der Primärleitung vorliegt. Dies hat zur Folge, dass unter Umständen nach erstmaligem Überschreiten des Öffnungsdruckes in der Primärleitung das Überströmventil öffnet und für einen temporären, geringfügigen Druckabfall in der Primärleitung, der auch durch die Öffnung des Überströmventils hervorgerufen sein kann, dennoch infolge der sich vergrößernden wirksamen Ventilfläche die Öffnungsstellung des Überströmventils aufrechterhalten bleibt.

Durchaus möglich ist, dass das elektronisch gesteuerte Steuerventil ohne elektrische Beaufschlagung des Haftmagneten seine Schließstellung einnimmt. Für eine andere Ausführungsform nimmt das elektronisch gesteuerte Steuerventil ohne elektrische Beaufschlagung des Öffnungsmagneten seine Öffnungsstellung ein. Dies war für aus dem Stand der Technik bekannte Ausführungsformen nicht möglich, da dann kein Leckageschutz gewährleistet war, wenn keine elektrische Beaufschlagung des Haftmagneten erfolgt, beispielsweise für den Fall des Einbruches einer elektrischen Leistungsversorgung. Für die erfindungsgemäße Ausgestaltung kann ein Auslaufen oder Tropfen auch zumindest reduziert werden, wenn das elektronisch gesteuerte Steuerventil ohne elektrische Beaufschlagung des Haftmagneten seine Öffnungsstellung einnimmt. Grund ist hierfür, dass beispielsweise im Fall des Einbruches der elektrischen Leistungsversorgung zwar das Steuerventil seine Öffnungsstellung einnimmt. Ein Durchfluss durch die Agrarspritzen-Ventileinheit ist dann aber dadurch unterbunden, dass das passive Überströmventil seine Schließstellung einnimmt.

Im Rahmen der Erfindung kann das elektronisch gesteuerte Steuerventil einen Steuerventil-Ventilkörper aufweisen, während das Überströmventil einen Überströmventil-Ventilkörper aufweist. Während grundsätzlich möglich ist, dass der Steuerventil-Ventilkörper und der Überströmventil-Ventilkörper auf unterschiedliche Ventilsitzkörper einwirken, schlägt die Erfindung für eine besonders kompakte Ausgestaltung vor, dass ein gemeinsamer Ventilsitzkörper eingesetzt ist. Dieser gemeinsame Ventilsitzkörper bildet dann zum einen den Steuerventil-Ventilsitz des elektronisch gesteuerten Steuerventils aus, an dem der Steuerventil-Ventilkörper in der Schließstellung des elektronisch gesteuerten Steuerventils zur Anlage kommt. Zum anderen bildet der gemeinsame Ventilsitzkörper dann den Überströmventil-Ventilsitz des Überströmventils aus, an dem der Überströmventil-Ventilkörper in der Schließstellung des Überströmventils zur Anlage kommt.

Für die konstruktive Ausgestaltung und Anordnung des Überströmventils und des elektronisch gesteuerten Steuerventils gibt es im Rahmen der Erfindung vielfältige und beliebige Möglichkeiten. Die Kompaktheit der Agrarspritzen-Ventileinheit kann für einen Vorschlag dadurch erhöht werden, dass das Überströmventil und das elektronisch gesteuerte Steuerventil radial ineinander geschachtelt sind. Hierbei kann das elektronisch gesteuerte Steuerventil radial außerhalb des Überströmventils angeordnet sein. Für einen besonderen Vorschlag der Erfindung ist allerdings das Überströmventil radial außerhalb des elektronisch gesteuerten Steuerventils angeordnet.

Hierbei ist für einen Vorschlag der Erfindung möglich, dass das Überströmventil einen Überströmventil-Ventilkörper aufweist, der eine Durchgangsausnehmung aufweist. Um lediglich ein nicht beschränkendes Beispiel zu nennen, kann der Überströmventil-Ventilkörper beispielsweise hülsenartig mit beliebigem Halblängsschnitt ausgebildet sein. In diesem Fall können/kann sich ein Kanal zwischen dem Überströmventil und dem elektronisch gesteuerten Ventil und/oder ein Bauelement des elektronisch gesteuerten Ventils zumindest teilweise durch die Durchgangsausnehmung erstrecken. Beispielsweise kann ein Stößel des Steuerventil-Ventilkörpers und/oder ein Führungs- und/oder Dichtkörper für denselben in der Durchgangsausnehmung angeordnet sein oder sich zumindest teilweise durch diese erstrecken.

Die Erfindung umfasst auch Ausführungsformen, bei welchen die Agrarspritzen-Ventileinheit ein Gehäuse aufweist, welches als zusätzliche Funktionen auch ein Bauelement des Überströmventils und/oder des Steuerventils ausbildet. Möglich ist im Rahmen der Erfindung aber auch, dass das Gehäuse an der Ausbildung des Steuerventils und des Überströmventils nicht beteiligt ist, sondern lediglich der Aufnahme und dem Halten und/oder Abstützen derselben dient. Die Erfindung schlägt auch vor, dass das Gehäuse einen Innenraum aufweist, wobei das Gehäuse hier ein- oder mehrteilig ausgebildet sein kann. Der Überströmventil-Ventilkörper, der Steuerventil-Ventilkörper und/oder mindestens ein Ventilsitzkörper sind dann separat von dem Gehäuse ausgebildet und im Inneren des Gehäuses (lösbar und demontierbar) angeordnet, wobei diese dann an dem Gehäuse abgestützt, gehalten und/oder geführt sein können.

Eine weitere Lösung der der Erfindung zugrunde liegenden Aufgabe stellt eine Agrarspritzen-Ventileinrichtung dar, die (mindestens) eine Agrarspritzen-Ventileinheit aufweist, wie diese zuvor erläutert worden ist. Hierbei kann die Agrarspritzen-Ventileinrichtung ausschließlich die Agrarspritzen-Ventileinheit aufweisen oder zusätzliche Komponenten besitzen wie beispielsweise mindestens
- eine Steuereinheit,
- eine Zuführ- und/oder oder Abführleitung, die mit der Primärleitung und/oder der Sekundärleitung verbunden sind/ist,
- eine agrare Ausbringdüse zum Ausbringen des Fluids,
- ein Leitungssystem oder auch einen Kreislauf für die Versorgung mit dem auszubringenden Fluid,
- einen Sprühbalken,
- eine Pumpe und
- in dem vorgenannten Kreislauf angeordnete fluidische und/oder elektronisch gesteuerte Ventile,
- einen Behälter zur Bereitstellung des auszubringenden Fluids u. ä.

In der Agrarspritzen-Ventileinrichtung ist eine Steuereinheit vorhanden. Hierbei kann es sich um eine spezifisch einer Agrarspritzen-Ventileinheit zugeordnete Steuereinheit handeln, die Bestandteil der Agrarspritzen-Ventileinheit ist, an dieser gehalten, beispielsweise angeflanscht ist oder extern von dieser angeordnet ist und mit der Agrarspritzen-Ventileinheit über eine Steuerleitung oder ein Bussystem in Verbindung steht. Die Steuereinheit ist in diesem Fall mit Steuerlogik ausgestattet, die aus der elektrischen Beaufschlagung (insbesondere einem absoluten Wert oder einem Verlauf eines Stroms und/oder einer Spannung) des Haftmagneten mindestens eine Kenngröße ermittelt. Dies umfasst die Ermittlung einer einzigen Kenngröße, beispielsweise zu spezifischen Zeitpunkten wie nach vorgegebenen Zeitspannen oder für vorbestimmte Betriebspunkte oder Änderungen der Betriebsart wie beispielsweise die Veränderung eines Tastverhältnisses der Pulsweitenmodulation, oder eine Ermittlung einer Folge von Kenngrößen oder sogar einen Kenngrößenverlauf. Die Kenngröße korreliert oder entspricht einem Durchfluss und/oder einem Ausmaß einer Verstopfung der Agrarspritzen-Ventileinheit, der Sekundärleitung, einer Verbindungsleitung zwischen der Agrarspritzen-Ventileinheit und der Ausbringdüse und/oder einer Ausbringdüse. Entspricht die Kenngröße einem Durchfluss, kann die Kenngröße für die Steuerung oder Regelung der Ausbringung mittels der Agrarspritzen-Ventileinheit Berücksichtigung finden. Korreliert die Kenngröße mit einem Ausmaß einer Verstopfung, kann eine Überwachung von Fehlfunktionen erfolgen und es kann die Einleitung von Gegenmaßnahmen zum Ausgleich der von der Soll-Ausbringung infolge der Verstopfung abweichenden Ist-Ausbringung erfolgen. Es kann auch ein Fehlereintrag oder eine Fehlerinformation an einen Benutzer wie einen Fahrer des Traktors erfolgen, dass eine Verstopfung vorliegt, und es kann auch ein Hinweis auf eine erforderliche Reinigung oder einen Spezialbetrieb zur automatisierten Beseitigung der Verstopfung gegeben werden. Hierbei kann die Kenngröße für die Verstopfung als binäres Signal für die Verstopfung ("Verstopfung", "keine Verstopfung") ausgewertet oder signalisiert werden oder das Ausmaß der Verstopfung kann in mehreren Stufen oder auch stufenlos erfasst, verarbeitet und/oder signalisiert werden.

Vorzugsweise ist die Steuerlogik der Steuereinheit geeignet ausgebildet, dass der Haftmagnet mittels einer Pulsweitenmodulation elektrisch beaufschlagt wird, wobei das elektrische Beaufschlagungssignal durch die Steuereinheit vorgegeben oder gesteuert wird. Möglich ist hierbei, dass die Kennlinie für den Durchfluss oder das Ausmaß der Verstopfung auf Grundlage der elektrischen Beaufschlagung ermittelt wird. Dieser Ausgestaltung liegt die Erkenntnis zugrunde, dass unabhängig von der Vorgabe durch die Steuereinheit die elektrische Beaufschlagung des Haftmagneten von der Stellung des Ankers und der Bewegung desselben abhängig ist. Ändert sich somit infolge eines veränderten durch Flusses oder eines geänderten Ausmaßes einer Verstopfung die Stellung des Ankers oder die Bewegung desselben, kann dieses anhand der elektrischen Beaufschlagung des Haftmagneten erkannt werden. Um lediglich ein die Erfindung nicht beschränkendes Beispiel zu nennen kann eine indizierte Spannung in der Spule abhängig sein von der Stellung und/oder der Bewegung des Ankers.

Für die Art der Auswertung des Signals der elektrischen Beaufschlagung des Haftmagneten (insbesondere des Stroms oder der Spannung) gibt es im Rahmen der Erfindung vielfältige Möglichkeiten, wobei sämtliche bekannten Verfahren der Signalverarbeitung und Signalanalyse eingesetzt werden können. Um lediglich einige Beispiele zu nennen, kann oder können während einer Periode der Pulsweitenmodulation, über mehrere Perioden der Pulsweitenmodulation oder auch einen Teil einer Periode der Pulsweitenmodulation ein Mittelwert, ein absoluter oder relativer Maximalwert, ein absoluter oder relativer Minimalwert, eine Steigung, ein Wendepunkt, ein Frequenzspektrum oder einzelne Werte des Frequenzspektrums einer FFT (Fast Fourier Transformation), eine Autokorrelationsfunktion und/oder ein zeitlicher Abstand repräsentativer Werte wie von Nulldurchgängen, von Maxima oder Minima ermittelt werden und zur Ermittlung der Kenngröße herangezogen werden.

Ein weiterer Vorschlag der Erfindung beruht auf der Erkenntnis, dass unter Umständen eine elektrische Beaufschlagung in unterschiedlichen Phasen des Duty-Cycles der Pulsweitenmodulation unterschiedlich aussagekräftig ist hinsichtlich der Kenngröße. Möglich ist bspw., dass es vorteilhaft ist, wenn die Kenngröße auf Grundlage der elektrischen Beaufschlagung (auch oder ausschließlich) während der OFF-Phase der Pulsweitenmodulation oder der Schließbewegung des elektronisch gesteuerten Steuerventils ermittelt wird. Ohne dass eine Einschränkung der Erfindung auf diese versuchsweise Erläuterung des Grundes hierfür erfolgen soll, wird vermutet, dass bei dem Auftreten einer Verringerung des Durchflusses und insbesondere einer Verstopfung in der Primärleitung und stromabwärts derselben der Steuerventil-Ventilkörper unterschiedlichen fluidischen Bedingungen auf der Primärseite und der Sekundärseite ausgesetzt ist. So kann mit einer Verstopfung beispielsweise der auf der Sekundärseite des Steuerventil-Ventilkörpers wirkende Druck ansteigen. Während ohne Verstopfung der Primärleitung (mit einer etwaigen Drosselwirkung beispielsweise im Bereich einer Ausbringdüse) ein in die Umgebung offener fluidischer Austrittsraum gebildet ist, führt eine Verstopfung auf der Sekundärseite zu einer zumindest teilweisen Verschließung des Austrittsraums, einer Veränderung der sekundärseitigen Drosselwirkung des Fluids und unter Umständen auch veränderten dynamischen Druckschwankungen des Fluids auf der Sekundärseite. Diese veränderten fluidischen Bedingungen an dem Steuerventil-Ventilkörper je nach Durchfluss und Verstopfung führen dann während der OFF-Phase der Pulsweitenmodulation oder der Schließbewegung des elektronisch gesteuerten Steuerventils zu einer Veränderung des Stroms oder der Spannung, welche dann zur Ermittlung der Kenngröße herangezogen werden kann.

Ebenfalls möglich ist aber auch, dass die Kenngröße auf Grundlage der elektrischen Beaufschlagung (auch oder ausschließlich) während der ON-Phase der Pulsweitenmodulation oder der Öffnungsbewegung des elektronisch gesteuerten Steuerventils ermittelt wird. Möglich ist des Weiteren, dass die Kenngröße einerseits anhand einer Teilkenngröße ermittelt wird, die während der OFF-Phase oder der Schließbewegung ermittelt wird, sowie andererseits anhand einer Teilkenngröße ermittelt wird, die während der ON-Phase oder der Öffnungsbewegung ermittelt wird.

Für die Art der Auswertung der Kenngröße gibt es im Rahmen der Erfindung vielfältige Möglichkeiten, von denen im Folgenden lediglich zwei alternative oder kumulative Optionen genannt werden sollen:
Möglich ist, dass die Steuerlogik so ausgebildet ist, dass die Kenngröße aus einem lokalen Maximum der elektrischen Beaufschlagung, also des Stroms oder der Spannung, während der OFF-Phase der Pulsweitenmodulation oder der Schließbewegung des elektronisch gesteuerten Steuerventils ermittelt wird. Überraschend hat sich gezeigt, dass sich ein derartiges lokales Maximum während der Schließbewegung des elektronisch gesteuerten Steuerventils mit einem veränderten Durchfluss und/oder einem sich verändernden Ausmaß der Verstopfung hinsichtlich seiner Lage und/oder hinsichtlich seines Betrages verändert, womit eine einfache und gleichzeitig zuverlässige Ermittlung der Kenngröße erfolgen kann.

Möglich ist auch, dass die Kenngröße für mehrere Zyklen der Pulsweitenmodulation ermittelt wird. Aus einer Veränderung der Kenngröße kann dann auf eine Veränderung des Durchflusses und/oder eines Ausmaßes einer Verstopfung geschlossen werden. Diese Veränderung kann dann lediglich qualitativ ausgewertet werden ("Veränderung des Durchflusses erfolgt" oder "Veränderung der Verstopfung erfolgt" oder "Veränderung nicht erfolgt") oder auch quantitativ, indem das Ausmaß der Veränderung der Kenngröße, unter Umständen unter Berücksichtigung einer linearen oder nicht linearen Abhängigkeit oder eines Kennfeldes, als Ausmaß für die Veränderung des Durchflusses und/oder eines Ausmaßes einer Verstopfung ausgewertet wird. Hierbei kann die Kenngröße auch von weiteren Betriebsparametern abhängig sein, die ggf. für die Auswertung zu berücksichtigen sind. So ist beispielsweise die Auswertung der Kenngröße in Abhängigkeit von den für die Pulsweitenmodulation genutzten Tastverhältnisses möglich. Alternativ oder kumulativ kann die Auswertung der Kenngröße auch von dem eingangsseitig in der Primärleitung bereitgestellten Druck oder einem Druck in einem fluidischen Versorgungskreis abhängig sein und somit entsprechend dieser Abhängigkeit eine Auswertung erfolgen.

Die Erfindung schlägt auch eine Agrarspritzen-Ventileinrichtung vor, die mehrere Agrarspritzen-Ventileinheiten aufweist. Den mehreren Agrarspritzen-Ventileinheiten sind dann jeweils Ausbringdüsen zugeordnet. Die Agrarspritzen-Ventileinheiten mit zugeordneten Ausbringdüsen sind an einem Sprühbalken gehalten und werden über eine Pumpe mit einem auszubringenden Fluid versorgt. Es ist dann mindestens eine elektronische Steuereinheit vorhanden, die mindestens eine zugeordnete Agrarspritzen-Ventileinheit ansteuert. Hierbei kann eine zentrale elektronische Steuereinheit für mehrere oder sämtliche Agrarspritzen-Ventileinheit zuständig sein. Ebenfalls möglich ist, dass dezentrale elektronische Steuereinheiten jeweils einer Agrarspritzen-Ventileinheit zugeordnet sind. Schließlich ist auch möglich, dass dezentrale Steuereinheiten für die zugeordneten Agrarspritzen-Ventileinheiten zuständig sind, wobei dann eine zentrale Steuereinheit vorhanden ist, welche den Betrieb der dezentralen Steuereinheiten und der zugeordneten Agrarspritzen-Ventileinheiten koordiniert.

Möglich ist, dass in der Agrarspritzen-Ventileinrichtung (mindestens) eine Agrarspritzen-Ventileinheit dauerhaft in der Öffnungsstellung ist, sodass bei dem Überfahren längerer Strecken auf einem Feld (beispielsweise für länger als 30 Sekunden, länger als 1 Minute, länger als 2 Minuten, länger als 5 Minuten oder sogar länger als 10 Minuten) kontinuierlich ein Soll-Volumenstrom des Fluids ausgebracht werden soll. Hierbei kann es wünschenswert sein, zu überwachen, ob sich das Ausbringverhalten verändert oder verschlechtert, insbesondere durch eine Verstopfung der Agrarspritzen-Ventileinheit, der Sekundärleitung und/oder einer Ausbringdüse. Erfindungsgemäß wird vorgeschlagen, dass Steuerlogik einer Steuereinheit trotz des an sich gewünschten Dauerbetriebs der Agrarspritzen-Ventileinheit in der Öffnungsstellung zu Testzwecken das Steuerventil in eine Schließstellung steuert. Dies kann temporär für ein kurzes Zeitintervall, insbesondere weniger als 100 Millisekunden, weniger als 50 Millisekunden oder weniger als 45 Millisekunden erfolgen, sodass die prozentuale Schließdauer der Agrarspritzen-Ventileinheit gegenüber der Gesamtdauer des Betriebs derselben in der Öffnungsstellung sehr klein ist und die Auswirkungen dieser Schließung auf das Feld minimal sind. Möglich ist, dass eine derartige temporäre Schließung der Agrarspritzen-Ventileinheit einmalig oder zur Erhöhung der Verlässlichkeit des Testbetriebs mehrmalig erfolgt. Ebenfalls möglich ist, dass eine derartige Schließung turnusgemäß, beispielsweise mit Wiederholungen im Bereich eines Turnus von 30 Sekunden bis 10 Minuten oder im Bereich von 1 Minute bis 5 Minuten oder im Bereich von 1 Minute bis 3 Minuten erfolgt, um lediglich einige die Erfindung nicht beschränkende Beispiele zu nennen. Mit einem derartigen Testbetrieb mit Überführung der Agrarspritzen-Ventileinheit in die Schließstellung (und anschließender Wiederöffnung desselben) kann ein Testsignal gewonnen werden, welches dann ausgewertet wird. Bei diesem Testsignal handelt es sich um die für die Überführung in die Schließstellung sowie anschließende Rückführung in die Öffnungsstellung erfolgende elektrische Beaufschlagung des Haftmagneten, insbesondere den Strom, mit dem der Haftmagnet beaufschlagt wird. Aus dem Verlauf der elektrischen Beaufschlagung wird mindestens eine Kenngröße ermittelt, die mit einem Durchfluss und/oder einem Ausmaß einer Verstopfung der Agrarspritzen-Ventileinheit, der Sekundärleitung und/oder einer Ausbringdüse zumindest korreliert. Es ist aber nicht zwingend die Ermittlung einer Kenngröße erforderlich. Vielmehr kann auch durch eine anderweitige Auswertung des Verlaufs der elektrischen Beaufschlagung ermittelt werden, wie groß der Durchfluss und/oder ein Ausmaß einer Verstopfung aktuell ist. Um lediglich ein die Erfindung nicht beschränkendes Beispiel zu nennen, kann für einen Abfall des Stroms des Haftmagneten das Auftreten eines Wendepunkts oder eines lokalen Maximums des Verlaufes oder die Höhe eines derartigen Maximums als Indikator für den Durchfluss oder das Ausmaß einer Verstopfung herangezogen werden.

Möglich ist aber auch, dass die Überführung des Steuerventils in die Schließstellung in einem Referenzbetrieb erfolgt, der insbesondere bei einer ersten Inbetriebnahme, nach einer Wartung oder in einem Zustand der Agrarspritzen-Ventileinheit erfolgt, für den bekannt ist, dass keine Verstopfung vorliegt und das Ausbringverhalten bestimmungsgemäß ist. In dem Referenzbetrieb kann dann die elektrische Beaufschlagung des Haftmagneten erfasst werden, die dann für einen nachfolgenden Betrieb als Referenzbeaufschlagung verwendet werden kann, sodass eine nachfolgend ermittelte elektrische Beaufschlagung des Haftmagneten mit der Referenzbeaufschlagung verglichen werden kann und aus diesem Vergleich dann Rückschlüsse auf das Ausmaß der Verstopfung möglich sind.

Für den Fall, dass eine Agrarspritzen-Ventileinrichtung mehrere Agrarspritzen-Ventileinheiten aufweist, die beispielsweise über einen Sprühbalken verteilt angeordnet sein können, wird vorgeschlagen, dass die Steuerventile der Agrarspritzen-Ventileinheiten nicht gleichzeitig zu Test- oder Referenzzwecken in ihre Schließstellungen überführt werden, sondern das dies zeitlich versetzt erfolgt. Möglich ist beispielsweise, dass die Agrarspritzen-Ventileinheiten jeweils einzeln und zeitlich versetzt in die Schließstellung gesteuert werden. Möglich ist aber auch, dass in einer Teilgruppe der Agrarspritzen-Ventileinheiten die Agrarspritzen-Ventileinheiten dieser Teilgruppe gleichzeitig in die Schließstellung gesteuert werden, während dann zeitlich versetzt Agrarspritzen-Ventileinheiten mindestens einer weiteren Teilgruppe in die Schließstellung gesteuert werden. Dies hat beispielsweise den Vorteil, dass bei einer Durchführung des Testbetriebs während des Überfahrens eines Feldes die Beeinträchtigung des Ausbringverhaltens durch den Testbetrieb nicht gleichzeitig und in einem vergrößerten Ausmaß erfolgt, sondern lediglich punktuell und zeitlich versetzt. Möglich ist auch, dass durch den zeitlichen Versatz ein Auftreten von Druckschwankungen in dem fluidischen Versorgungssystem vermieden oder reduziert werden.

Für einen Vorschlag der Erfindung steuert die Steuerlogik der Steuereinheit in einem Referenzbetrieb das Steuerventil einer Agrarspritzen-Ventileinheit in eine Schließstellung. Während dieses Referenzbetriebs wird dann die elektrische Beaufschlagung, insbesondere der Strom, erfasst und diese elektrische Beaufschlagung wird als Referenzbeaufschlagung gespeichert. Hierbei kann die Erfassung und Speicherung einen Verlauf der elektrischen Beaufschlagung oder des Stroms betreffen. Möglich ist aber auch, dass lediglich eine charakteristische Größe der elektrischen Beaufschlagung erfasst wird oder aus der elektrischen Beaufschlagung abgeleitet wird und gespeichert wird. So kann beispielsweise als charakteristische Größe ein Maximum, der Zeitpunkt des Auftretens des Maximums, ein Wendepunkt, eine Änderungsgeschwindigkeit u. ä. des Verlaufes des Stroms erfasst, ermittelt und/oder gespeichert werden. Dieser Referenzbetrieb wird zu einem Zeitpunkt durchgeführt, wenn von einem ordnungsgemäßen Ausbringverhalten der Agrarspritzen-Ventileinheit ausgegangen wird, beispielsweise bei einer ersten Inbetriebnahme, vor der Fahrt über das Feld oder nach einer Wartung. In einem späteren Testbetrieb, beispielsweise während der Nutzung der Agrarspritzen-Ventileinheit beim Ausbringen von Fluid auf dem Feld, wird dann das Steuerventil (singulär, temporär oder auch turnusgemäß) in eine Schließstellung gesteuert. In diesem Fall kann das Ausmaß einer Verstopfung der Agrarspritzen-Ventileinheit, der Sekundärleitung und/oder eine Ausbringdüse ermittelt werden, indem die Referenzbeaufschlagung mit der während des Testbetriebs erfassten elektrischen Beaufschlagung verglichen wird. Diese Ausführungsform ist beispielsweise dann von Vorteil, wenn in der fluidischen Kette für das Ausbringen des Fluids mit der Agrarspritzen-Ventileinheit Fertigungstoleranzen vorhanden sind, die dazu führen, das die elektrischen Beaufschlagung auch ohne eine Verstopfung der Agrarspritzen-Ventileinheit für unterschiedliche Agrarspritzen-Ventileinheiten mehr oder weniger voneinander abweicht. Würden in diesem Fall für sämtliche Agrarspritzen-Ventileinheiten dieselben Kriterien für die Auswertung des Ausmaßes der Verstopfung zum Ansatz gebracht werden, wäre durch die Fertigungstoleranzen die Güte der Überwachung des Ausmaßes der Verstopfung reduziert. Das zuvor beschriebene Verfahren ermöglicht somit, die Ermittlung des Ausmaßes der Verstopfung von den erläuterten Fertigungstoleranzen unabhängig zu machen. Dieses Verfahren kann Einsatz finden für eine einzelne Agrarspritzen-Ventileinheit, die einer Charge von mehreren, Fertigungsabweichungen innerhalb der Fertigungstoleranzen aufweisenden Agrarspritzen-Ventileinheiten entnommen ist. Möglich ist aber auch, dass eine derartiger Referenzbetrieb sukzessive für mehrere gemeinsam betriebene Agrarspritzen-Ventileinheiten durchgeführt wird und dann für jede Agrarspritzen-Ventileinheit der Vergleich der jeweils spezifisch ermittelten Referenzbeaufschlagung mit der während des Testbetriebs erfassten elektrischen Beaufschlagung erfolgt.

Um lediglich einige die Erfindung nicht beschränkende Beispiel zu nennen, kann das Ausmaß der Verstopfung aus
- einem absoluten oder relativen Vergleich der Maxima der Referenzbeaufschlagung und der im Testbetrieb ermittelten Beaufschlagung und/oder
- einem Vergleich eines zeitlichen Auftretens der Maxima der Referenzbeaufschlagung und der im Testbetrieb ermittelten Beaufschlagung und/oder
- einem Flächeninhalte der Differenz der Verläufe der Referenzbeaufschlagung und der im Testbetrieb ermittelten Beaufschlagung über der Zeit
ermittelt werden.

Möglich ist, dass die elektrische Beaufschlagung für ein vorgegebenes Ausmaß der Verstopfung der Agrarspritzen-Ventileinheit unabhängig von dem in der Primärleitung anliegenden Druck ist oder eine tolerable Druckabhängigkeit vorliegt. Ist dies nicht der Fall, schlägt die Erfindung vor, dass ein Referenzbetrieb für eine Agrarspritzen-Ventileinheit für unterschiedliche in der Primärleitung anliegende Drücke durchgeführt wird. In diesem Fall können dann mehrere druckabhängige Referenzbeaufschlagungen gespeichert werden. Ein Ausmaß einer Verstopfung der Agrarspritzen-Ventileinheit, der Sekundärleitung und/oder einer Ausbringdüse kann in diesem Fall ermittelt werden durch einen Vergleich der Referenzbeaufschlagung für den Druck, der während des Testbetriebs in der Primärleitung angelegen hat, mit der während des Testbetriebs erfassten elektrischen Beaufschlagung. Hierdurch kann die Genauigkeit und Zuverlässigkeit der Ermittlung des Ausmaßes einer Verstopfung weiter erhöht werden.

Eine weitere Ausgestaltung der Erfindung hat die Reduzierung des Energiebedarfs der Agrarspritzen-Ventileinrichtung zum Gegenstand: Während grundsätzlich davon ausgegangen wird, dass für die Aufrechterhaltung der Schließstellung des Haftmagneten eine permanente Bestromung des Haftmagneten mit einem ausreichendem Haltestrom erforderlich ist, schlägt die Erfindung vor, dass mittels einer Steuerlogik einer Steuereinheit die elektrische Beaufschlagung, insbesondere die an dem Haftmagneten wirkende Spannung, in der Schließstellung des Steuerventils oszillierend zwischen einem Maximum und einem Minimum variiert wird. Hierbei ist jeder oszillierende Verlauf der elektrischen Beaufschlagung zwischen dem Maximum und dem Minimum möglich, wobei vorzugsweise eine oszillierende Rechteckspannung mit einem Maximum und einem Minimum von 0 an dem Haftmagneten wirkt. Es hat sich überraschend gezeigt, dass trotz der temporären Reduzierung der elektrischen Beaufschlagung von dem Maximum zu dem Minimum der Haftmagnet und damit die Agrarspritzen-Ventileinheit seine Schließstellung beibehält. Hierfür können die folgenden Effekte, auf welche die Erfindung aber nicht beschränkt sein soll, verantwortlich sein:
a) Möglich ist, dass die Trägheit des Haftmagneten und der damit bewegten Bauelemente, die mit der Bewegung des Haftmagneten verbundenen Widerstandskräfte in Folge der Reibung und/oder der von dem Druck ausgeübten Kräfte dazu führen, dass trotz der Reduzierung des Haltestroms der Haftmagnet sich so langsam in Bewegung setzt, dass dieser bis zum Wiederanstieg des Haltestroms einen so kleinen Weg zurückgelegt hat, dass einerseits der Haftmagnet wieder unmittelbar in die Schließstellung bewegt werden kann und andererseits die sehr kleine Bewegung des Haftmagneten und des damit bewegten Steuerventil-Ventilkörpers so klein ist, dass (beispielsweise in Folge der unverändert gewährleisteten Dichtwirkung der elastischen Dichtung bei kleinen Öffnungsbewegungen) noch keine Öffnung des Steuerventils erfolgt ist.
b) Möglich ist auch, dass die Reduzierung des Haltestroms in der Spule des Haftmagneten ein Gegenfeld indiziert, welches letzten Endes dazu führt, dass trotz der Reduzierung der Haltespannung auf ein Minimum oder sogar auf 0 der Haltestrom weiterhin aufrecht erhalten wird oder nur in einem so geringen Ausmaß reduziert wird, dass weiterhin die Haltekraft ausreicht, um den Haftmagneten in der Schließstellung zu halten.

An die oben erwähnten Effekte ist dann die Frequenz der oszillierenden elektrischen Beaufschlagung anzupassen. Beispielsweise kann die Frequenz der Oszillation der elektrischen Beaufschlagung im Bereich von 100 bis 500 Hz oder 200 bis 300 Hz liegen.

Im Rahmen der Erfindung kann eine Auswertung des Verlaufs des Stroms, mit dem der Haftmagnet beaufschlagt wird, erfolgen. Für einen besonderen Vorschlag der Erfindung wird dieser Verlauf genutzt, um den Zeitpunkt zu ermitteln, zu dem die Schließstellung des Steuerventils erreicht wird. Dies kann einerseits für die exakte Bestimmung des Verhältnisses der Öffnungszeiten zu Schließzeiten des Steuerventils und/oder für eine exakte Steuerung oder Regelung des Volumenstroms des Fluids von Bedeutung sein. Andererseits kann der Zeitpunkt des Erreichens der Schließstellung auch genutzt werden, um eine Anpassung des Stroms, mit dem der Haftmagnet beaufschlagt wird, vorzunehmen, insbesondere mit einer Reduzierung des Stroms, der ausreichend zum Halten ist, da ein Luftspalt des Haftmagneten geschlossen ist. Alternativ oder zusätzlich kann der ermittelte Zeitpunkt des Erreichens der Schließstellung genutzt werden, um die zuvor erläuterte oszillierende elektrische Beaufschlagung auszulösen. Gemäß dem erfindungsgemäßen Vorschlag wird der Zeitpunkt des Erreichens der Schließstellung des Steuerventils aus dem Verlauf des Stroms, mit dem der Haftmagnet beaufschlagt wird, ermittelt, indem (u. U. nach einem Anstieg des Stroms bis auf ein Maximum zur Beschleunigung des Haftmagneten aus der Öffnungsstellung, dem Erreichen eines Maximums des Stroms und einer daran anschließenden Verringerung des Stroms mit der Verringerung des Spalts des Haftmagneten) eine Verringerung des Stroms auf oder unter einen Schwellwert detektiert wird, der mit dem Strom korreliert, der erreicht wird, wenn die Schließstellung erreicht ist. Zur Erhöhung der Sicherheit des Erkennens des Erreichens der Schließstellung kann anschließend zusätzlich geprüft werden, ob ein Anstieg des Stroms detektiert wird, der dadurch auftritt, dass der Spalt des Haftmagneten vollständig geschlossen ist. Alternativ oder kumulativ kann während der Verringerung des Stroms zur Erkennung des Erreichens der Schließstellung detektiert werden, ob ein Wendepunkt oder eine Unstetigkeit des sich verringernden Stroms vorliegt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einem Längsschnitt eine Agrarspritzen-Ventileinheit, bei der sich ein Überströmventil in einer Schließstellung befindet, während sich ein elektronisch gesteuertes Steuerventil in einer Öffnungsstellung befindet.
- **Fig. 2**: zeigt ein Detail II der Agrarspritzen-Ventileinheit gemäß Fig. 1.

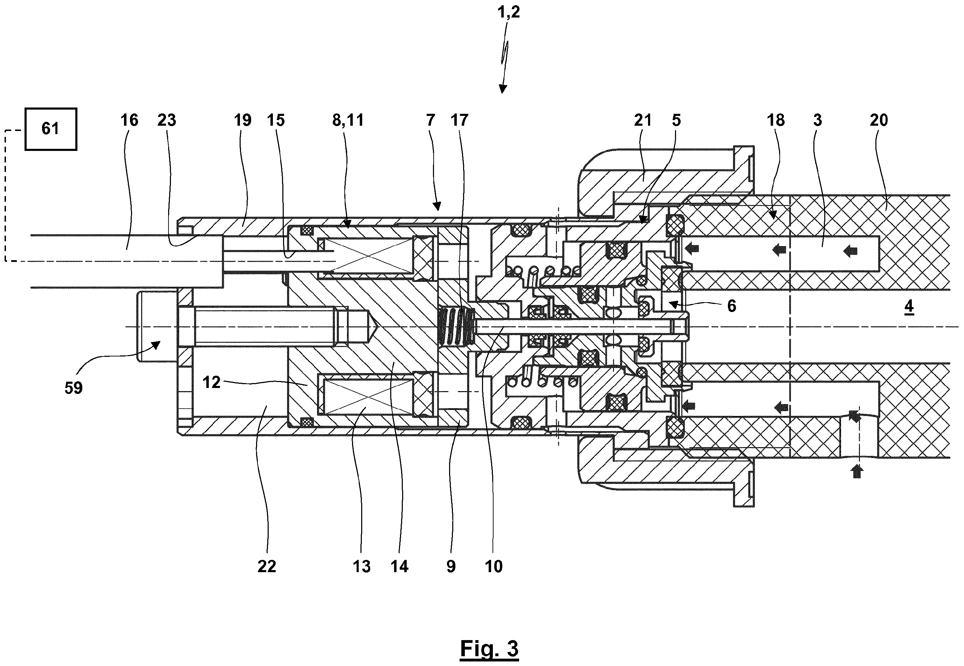

- **Fig. 3**: zeigt in einem Längsschnitt die Agrarspritzen-Ventileinheit gemäß Fig. 1 und 2, wobei sich hier sowohl das elektronisch gesteuerte Steuerventil als auch das passive Überströmventil in ihren Schließstellungen befinden.
- **Fig. 4**: zeigt in einem Längsschnitt die Agrarspritzen-Ventileinheit gemäß Fig. 1 bis 3, wobei sich hier das Überströmventil in seiner Öffnungsstellung befindet, während das elektronisch gesteuerte Steuerventil in seiner Schließstellung ist.
- **Fig. 5**: zeigt in einem Längsschnitt die Agrarspritzen-Ventileinheit gemäß Fig. 1 bis 4, wobei sich hier sowohl das Überströmventil als auch das elektronisch gesteuerte Steuerventil in ihren Öffnungsstellungen befinden.
- **Fig. 6**: zeigt schematisch den Verlauf einer elektrischen Beaufschlagung eines Haftmagneten einer Agrarspritzen-Ventileinheit, während einer Periode der Pulsweitenmodulation, wobei mit durchgezogener Linie der Verlauf ohne Verstopfung, mit gestrichelter Linie der Verlauf mit einer geringeren Verstopfung und gepunktet der Verlauf mit einer größeren Verstopfung dargestellt ist.
- **Fig. 7**: zeigt schematisch den Verlauf einer elektrischen Beaufschlagung eines Haftmagneten einer Agrarspritzen-Ventileinheit für die Schließung des Steuerventils aus einer Öffnungsstellung sowie die anschließende erneute Öffnung des Steuerventils, wobei a) den Verlauf des Stroms, mit dem der Haftmagnet beaufschlagt ist, zeigt und b) den Verlauf der Spannung, mit der der Haftmagnet beaufschlagt wird, zeigt.
- **Fig. 8**: zeigt schematisch den Verlauf einer elektrischen Beaufschlagung eines Haftmagneten einer Agrarspritzen-Ventileinheit für die Schließung des Steuerventils aus einer Öffnungsstellung sowie die anschließende erneute Öffnung des Steuerventils, wobei a) den Verlauf des Stroms, mit dem der Haftmagnet beaufschlagt ist, zeigt und b) den Verlauf der Spannung, mit der der Haftmagnet beaufschlagt wird, zeigt, wobei in der Schließstellung des Steuerventils der Haftmagnet mit einer zwischen einem Maximum und einem Minimum oszillierenden Spannung beaufschlagt wird.

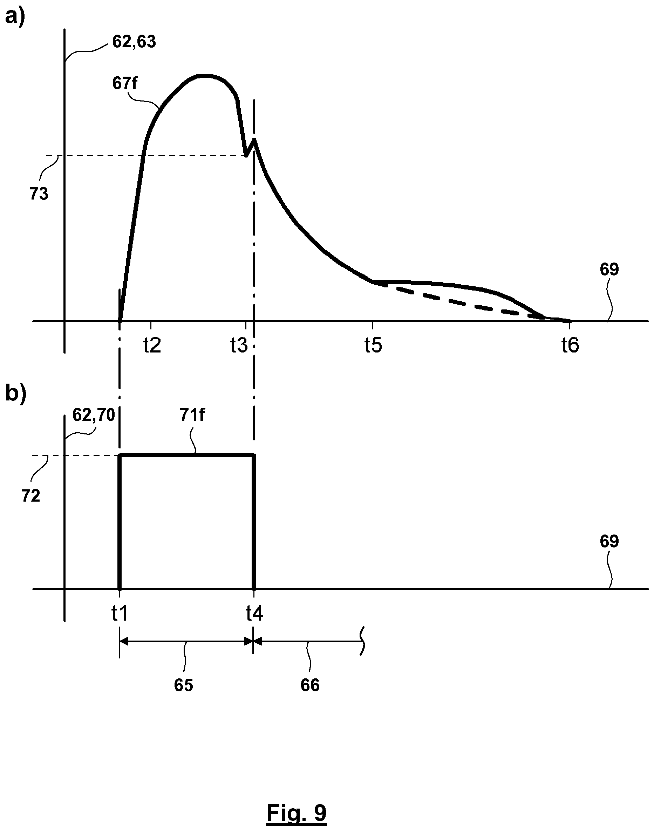

- **Fig. 9**: zeigt schematisch den Verlauf einer elektrischen Beaufschlagung eines Haftmagneten einer Agrarspritzen-Ventileinheit für die Schließung des Steuerventils aus einer Öffnungsstellung sowie die anschließende erneute Öffnung des Steuerventils, wobei a) den Verlauf des Stroms, mit dem der Haftmagnet beaufschlagt ist, zeigt und b) den Verlauf der Spannung, mit der der Haftmagnet beaufschlagt wird, zeigt, wobei die Verläufe als Testsignal zur Ermittlung eines Ausmaßes einer Verstopfung herangezogen werden und mit durchgezogener Linie der Verlauf des Stroms für ein nicht oder geringfügig verstopftes Steuerventil dargestellt ist, während die gestrichelte Linie den Verlauf des Stromes für ein verstopftes Steuerventil zeigt.

### FIGURENBESCHREIBUNG

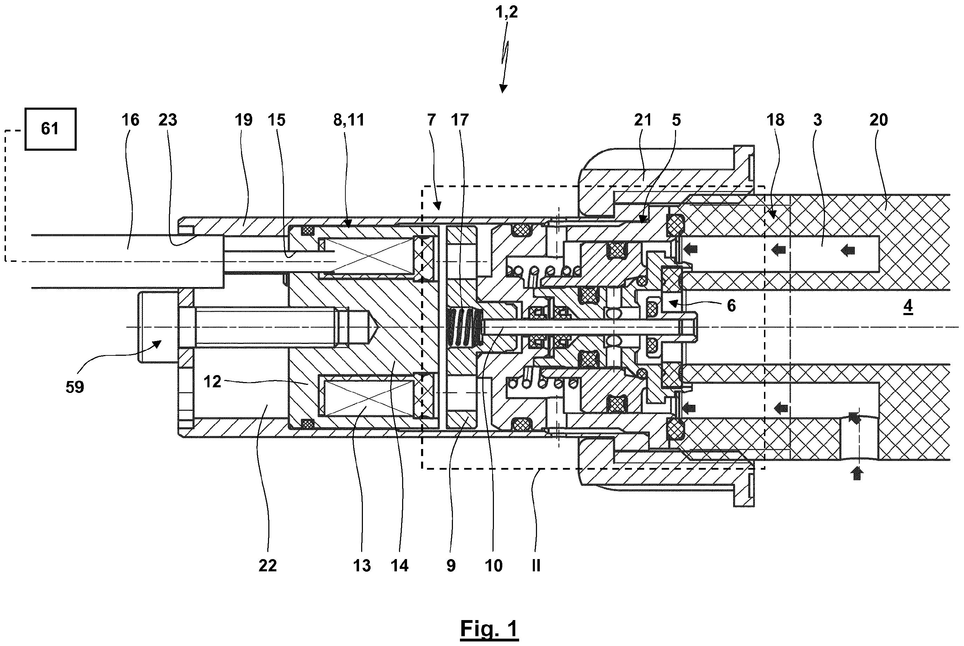

**Fig. 1** zeigt in einem Längsschnitt eine Agrarspritzen-Ventileinheit 1, die eine Agrarspritzen-Ventileinrichtung 2 bilden kann oder Bestandteil derselben sein kann.

Die Agrarspritzen-Ventileinheit 1 verfügt über einen hier nicht dargestellten eingangsseitigen Anschluss, der in eine Primärleitung 3 mündet, sowie einen hier nicht dargestellten, ausgangsseitigen Anschluss, zu dem eine Sekundärleitung 4 führt. Die Primärleitung 3 ist über ein Überströmventil 5 und ein elektronisch gesteuertes Steuerventil 6 mit der Sekundärleitung 4 verbunden. Hierbei sind die Primärleitung 3, das Überströmventil 5, das Steuerventil 6 und die Sekundärleitung 4 in dieser Reihenfolge in fluidischer Reihenschaltung angeordnet.

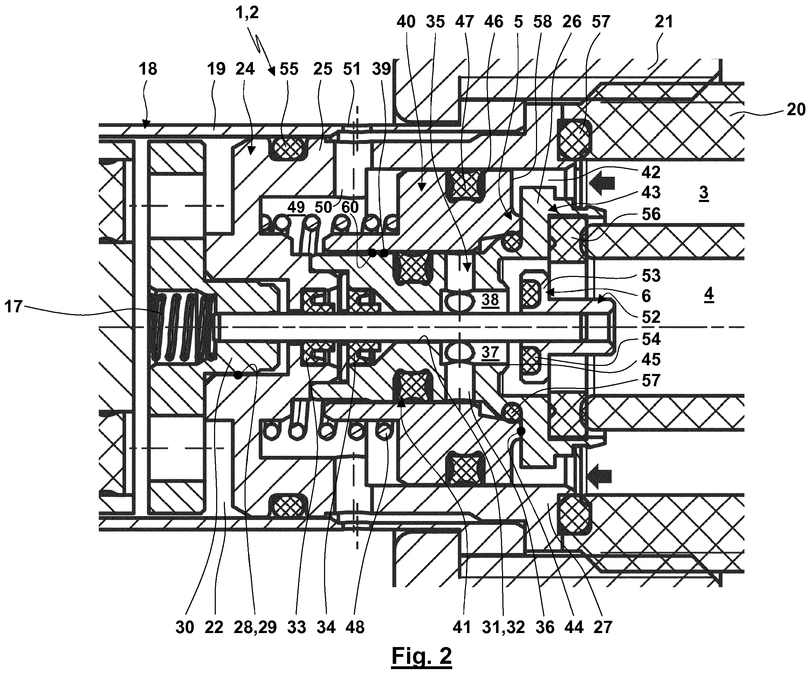

Eine elektronische Betätigung des Steuerventils 6 ist ermöglicht über einen elektrischen Aktuator 7, der für das dargestellte Ausführungsbeispiel einen Haftmagneten 8 aufweist. Der Haftmagnet 8 wirkt auf einen Anker 9 ein, der einen Ventilstößel 10 trägt. Der Haftmagnet 8 ist hier als Topfmagnet 11 ausgebildet. Der Haftmagnet 8 verfügt dazu über einen elektromagnetisch wirksamen Aufnahmekörper 12, der im Halblängsschnitt in der Art eines liegenden U ausgebildet ist. Eine Spule 13 des Haftmagneten 8 ist dabei zwischen den beiden parallelen Schenkeln des liegenden U in den Aufnahmekörper 12 eingebettet, wobei die Spule 12 die in Fig. 1 horizontale Betätigungsachse des Haftmagneten 8 konzentrisch umgibt. Der innenliegende Schenkel des liegenden U im Halblängsschnitt bildet einen innenliegend von der Spule 13 angeordneten, festen Kern 14. In einem Umfangsbereich verfügt der Grundschenkel des liegenden U über einen Durchlass 15, über welchen der Spule 13 ein externes elektrisches Beaufschlagungssignal, beispielsweise über ein Kabel oder einen Stecker 16, zugeführt werden kann. Zwischen dem Haftmagneten 8 und dem Anker 9 wirkt eine Feder, die hier als Öffnungsfeder 17 ausgebildet ist und den Anker 9 von dem Haftmagneten 8 weg beaufschlagt. Abweichend zu der Darstellung in den Fig. 1 und 2 ist die Öffnungsfeder 17 auch in der dargestellten Öffnungsstellung vorgespannt, so dass die Öffnungsfeder 17 mit einem Federfußpunkt an dem Anker 9 und mit dem anderen Federfußpunkt an dem Aufnahmekörper 12 mit einer Vorspannkraft anliegt. Im unbestromten Zustand des Haftmagneten 8 befindet sich somit infolge der Wirkung der Öffnungsfeder 17 der Anker 9 in seiner Öffnungsstellung. Die Steuerung (wovon auch eine Regelung umfasst ist) der elektrischen Beaufschlagung der Spule 14 des Haftmagneten 8 erfolgt über eine Steuereinheit 61.

Für das dargestellte Ausführungsbeispiel verfügt die Agrarspritzen-Ventileinheit 1 über ein Gehäuse 18, welches Gehäuseteile 19, 20 aufweist, die mittels einer Überwurfmutter 21 miteinander verbunden sind. Das Gehäuse begrenzt einen Innenraum 22, in dem insbesondere die Bauelemente des Überströmventils 5, des Steuerventils 6 und des Aktuators 7 angeordnet sind.

Das Gehäuseteil 19 weist einen Anschluss oder Durchlass 23 für den Stecker oder das Kabel 16 auf. Des Weiteren bildet das Gehäuse 18 die Anschlüsse für die Primärleitung 3 und die Sekundärleitung 4 oder trägt diese. Über eine Befestigungsschraube 59 ist der Haftmagnet 8 an dem Gehäuse 18 befestigt.

Der weitere Aufbau der Agrarspritzen-Ventileinheit 1, insbesondere des Überströmventils 5, des Steuerventils 6 und die Kopplung des Steuerventils 6 mit dem Aktuator 7, ist im Detail II in **Fig. 2** dargestellt:
In dem Innenraum 22 des Gehäuses 18 ist ein Gehäuseeinsatz 24 angeordnet. Aus Montagegründen ist der Gehäuseeinsatz 24 zweiteilig ausgebildet mit Gehäuseeinsatzteilen 25, 26. Der Gehäuseeinsatz 24 ist in montiertem Zustand fest in dem Gehäuse 18 gehalten, was für das dargestellte Ausführungsbeispiel dadurch gewährleistet ist, dass ein umlaufender, radial nach außen orientierter Ringbund 27 über die Überwurfmutter 21 zwischen den Stirnseiten der Gehäuseteile 19, 20 verspannt wird.

Der Gehäuseeinsatz 24 ist multifunktional:
- Der Gehäuseeinsatz 24 bildet auf der dem Anker 9 zugewandten Seite eine Führung 28 für den Anker 9. Für das dargestellte Ausführungsbeispiel verfügt zu diesem Zweck der Gehäuseeinsatz 24 über eine Bohrung 29, in welcher ein zylindrischer Fortsatz 30 des Ankers 9 geführt ist.
- Von dem Boden der Bohrung 29 geht eine Durchgangsbohrung 31 des Gehäuseeinsatzes 24 aus, im Bereich derer mindestens eine Führung 32 für den Ventilstößel 10 angeordnet ist und/oder Dichtelemente 33, 34 zwischen dem Gehäuseeinsatz 24 und dem Ventilstößel 10 wirken. Für das dargestellte Ausführungsbeispiel wirkt ein Dichtelement 33 zwischen dem Gehäuseeinsatzteil 25 und dem Ventilstößel 10, während das andere Dichtelement 34 zwischen dem Gehäuseeinsatzteil 26 und dem Ventilstößel 10 wirkt.
- Auf der dem Anker 9 abgewandten und dem Steuerventil 6 zugewandten Seite bildet und/oder begrenzt der Gehäuseeinsatz 24, hier das Gehäuseeinsatzteil 26, mindestens einen (Strömungs-)Kanal 35, über welchen das Fluid von dem Überströmventil 5 zu dem Steuerventil 6 gelangen kann. Für das dargestellte Ausführungsbeispiel ist der Kanal 35 mit radialen Bohrungen 36 und einem Ringraum 37, in welchen die Bohrungen 36 radial innenliegend münden, gebildet. Hierbei ist der Ringraum 37 radial innenliegend begrenzt von dem Ventilstößel 10, während dieser radial außenliegend von einer abgestuften Bohrung 38, in welche die Durchgangsbohrung 31 mündet, begrenzt ist.
- Eine zylindrische Mantelfläche des Gehäuseeinsatzes 24, hier des Gehäuseeinsatzteils 26, bildet eine Führung 39 für einen Überströmventil-Ventilkörper 40 im Bereich einer Durchgangsausnehmung 60 des Überströmventil-Ventilkörper 40. Im Bereich der Führung 39 wirkt zwischen dem Gehäuseeinsatzteil 26 und der Durchgangsausnehmung 60 des Überströmventil-Ventilkörper 40 ein Dichtelement 41, welches hier in einer Umfangsnut des Gehäuseeinsatzteils 26 angeordnet ist.
- Das Gehäuseeinsatzteil 25 bildet (radial innenliegend von dem Ringbund 27) einen Ventilsitzkörper 43. Auf der dem Anker 9 zugewandten Seite bildet der Ventilsitzkörper 43 einen Überströmventil-Ventilsitz 44. Des Weiteren bildet der Ventilsitzkörper 43 auf der dem Anker 9 abgewandten Seite, hier radial innenliegend von dem Überströmventil-Ventilsitz 44, einen Steuerventil-Ventilsitz 45.
- Der Überströmventil-Ventilkörper 40 ist auch im Bereich seiner zylindrischen Mantelfläche über eine Führung 46, hier eine zylindrische Innenfläche des Gehäuseeinsatzteils 25, geführt, wobei auch hier im Bereich der Führung 46 eine Abdichtung über ein Dichtelement 47 erfolgt, das in einer Umfangsnut des Überströmventil-Ventilkörpers 40 aufgenommen ist.
- An dem Gehäuseeinsatz 24, hier dem Gehäuseeinsatzteil 25, ist ein Federfußpunkt einer Schließfeder 48 abgestützt, die zwischen dem Gehäuseeinsatzteil 25 und dem Überströmventil-Ventilkörper 40 vorgespannt ist und den Überströmventil-Ventilkörper 40 infolge der Vorspannung gegen den Überströmventil-Ventilsitz 44 drückt.
- Ein zwischen dem Überströmventil-Ventilkörper 40 und dem Gehäuseeinsatzteil 25 gebildeter Ringraum 49, dessen axiale Erstreckung sich bei einer Bewegung des Überströmventil-Ventilkörpers 40 verändert und in dem die Schließfeder 48 angeordnet ist, ist über eine radiale Bohrung 50 des Gehäuseeinsatzteils 25 und eine hiermit verbundene Bohrung 51 entlüftet.

Die vorgenannten Ausgestaltungen und Funktionen sind lediglich optional und können alternativ oder kumulativ vorhanden sein.

In dem auf der dem Anker 9 abgewandten, aus dem Gehäuseeinsatz 24 herausragenden Endbereich trägt der Ventilstößel 10 einen Steuerventil-Ventilkörper 52, der einen ringförmigen Ventilteller 53 ausbildet. In dem Kontaktbereich des Ventiltellers 53 mit dem Steuerventil-Ventilsitz 45 verfügt der Steuerventil-Ventilkörper 52 über ein Dichtelement 54, welches hier zumindest teilwiese in eine axiale, in Umfangsrichtung umlaufende Nut des Ventiltellers 53 eingebettet ist.

Weitere Dichtelemente 55, 56, 57 gewährleisten in für den Fachmann ersichtlicher Weise, dass das Fluid von der Primärleitung 3 mit dem Ringkanal 42 ohne Leckage lediglich über das Überströmventil 5, den Kanal 35 und das Steuerventil 6 zu der Sekundärleitung 4 gelangen kann.

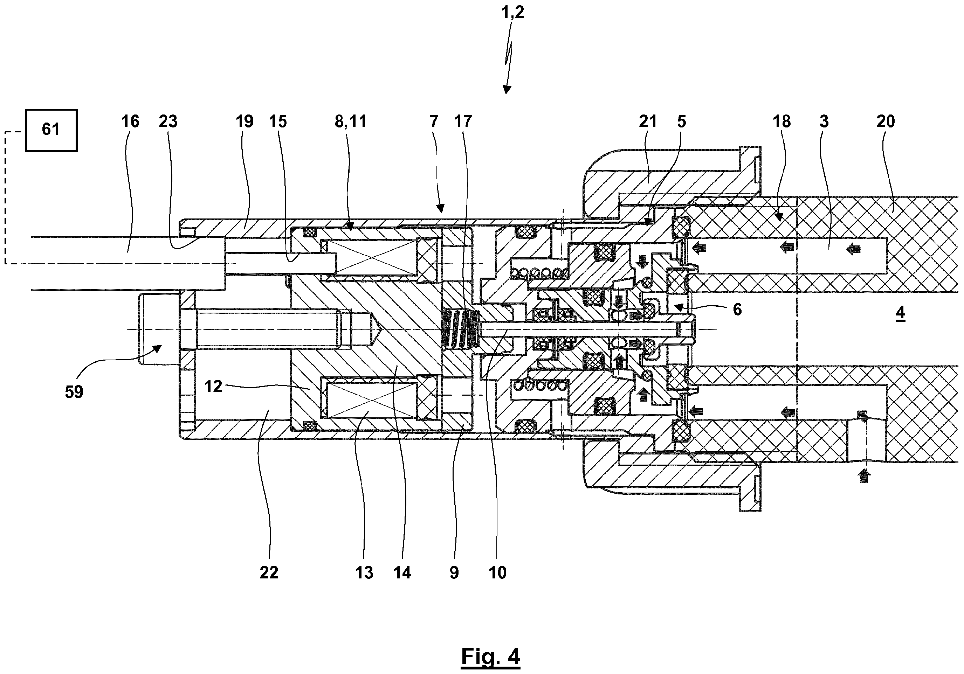

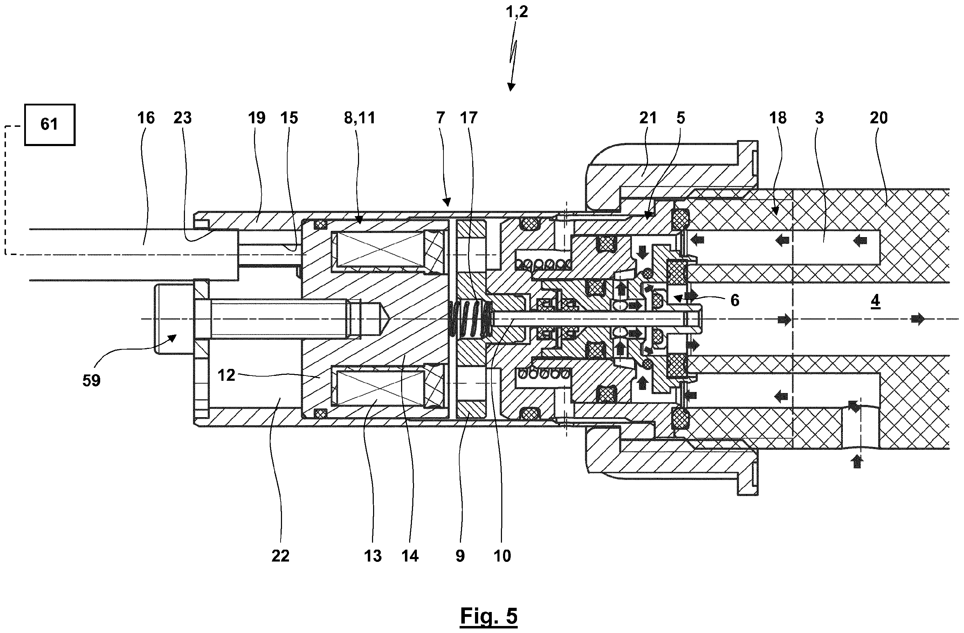

Die Funktionsweise der Agrarspritzen-Ventileinheit 1 ist wie folgt:
a) Zunächst ist gemäß Fig. 1 weder die Spule 13 des Haftmagneten 8 bestromt noch steht an der Primärleitung 3 ein fluidischer Druck an. Dies hat zur Folge, dass die Schließfeder 48 den Überströmventil-Ventilkörper 40 gegen den Überströmventil-Ventilsitz 44 presst, womit das Überströmventil 5 in seiner Schließstellung ist. Möglich ist, dass in der Schließstellung des Überströmventils 5 zwischen dem Überströmventil-Ventilsitz 44 und dem Überströmventil-Ventilkörper 40 ein Dichtelement 57 wirkt. Infolge der Wirkung der Öffnungsfeder 17 nehmen der Anker 9, der Ventilstößel 10 und der Steuerventil-Ventilkörper 52 die Öffnungsstellung ein, womit das Steuerventil 6 seine Öffnungsstellung einnimmt.
b) Wird, beispielsweise mit Aufnahme eines Förderbetriebs eines Kreises zur Versorgung der Agrarspritzen-Ventileinheit 1 oder der Öffnung eines vorgeordnetem Ventils, die Primärleitung 3 mit einem Druck beaufschlagt, der kleiner ist als ein Öffnungsdruck des Überströmventils 5, wirkt der Druck an einer Ringfläche 58, welche außerhalb des abgedichteten Kontakts zwischen dem Überströmventil-Ventilkörper 40 und dem Überströmventil-Ventilsitz 44 angeordnet ist. Die an dieser Ringfläche 58 erzeugte Druckkraft ist kleiner als die Kraft der Schließfeder 48, so dass die Schließstellung des Überströmventils 5 beibehalten wird. Obwohl das Steuerventil 6 in der Öffnungsstellung ist, erfolgt kein Hindurchtritt von Fluid durch die Agrarspritzen-Ventileinheit 1 und es erfolgt insbesondere kein Austropfen des Fluids. Mittels der Wahl der Fläche der Ringfläche 58 einerseits, den Vorspannweg der Schließfeder 48 und die Federsteifigkeit der Schließfeder 48 kann konstruktiv der Öffnungsdruck des Überströmventils 5 vorgegeben werden.
c) Überschreitet der Druck des Fluids in der Primärleitung 3 den Öffnungsdruck des Überströmventils 5, überschreitet die an der Ringfläche 58 durch das Fluid hervorgerufene Druckkraft die Schließkraft der Schließfeder 48, was zur Folge hat, dass der Überströmventil-Ventilkörper 40 sich von den Überströmventil-Ventilsitz 44 wegbewegen kann, so dass zwischen diesen ein Übertrittsquerschnitt geschaffen werden kann. Mit Ausbildung des Übertrittsquerschnitts wirkt der Druck in der Primärleitung 3 nicht mehr nur noch auf die Ringfläche 58, sondern auf die gesamte Stirnfläche des Überströmventil-Ventilkörpers 40, nämlich die Ringfläche zwischen den beiden Dichtelementen 41, 47. Somit tritt mit geringfügiger Öffnung des Überströmventils 5 eine Vergrößerung der Öffnungskraft des Überströmventils 5 auf. Fluid kann dann von der Primärleitung 3 über das Überströmventil 5 und den Kanal 35 zu dem Steuerventil 6 gelangen. Es erfolgt nun ein Druckausgleich zwischen der Primärleitung 3 und der Sekundärleitung 4, womit auch eine Verringerung der Öffnungskraft des Überströmventils 5 erfolgen kann. Infolge der Vergrößerung der Fläche, auf welche der sich verringernde Druck mit der Öffnung des Überströmventils 5 wirkt, kann dennoch die Öffnungsstellung des Überströmventils 5 aufrechterhalten werden.
   Ist zunächst der Haftmagnet 8 nicht bestromt, befindet sich das Steuerventil 6 infolge der Wirkung der Öffnungsfeder 17 in seiner Öffnungsstellung, in der zwischen dem Steuerventil-Ventilkörper 52 und dem Steuerventil-Ventilsitz 45 ein Übertrittsquerschnitt geschaffen ist, über den das Fluid zu der Sekundärleitung 4 übertreten kann (Fig. 5).
d) Durch Bestromung der Spule 13 kann der Haftmagnet 8 den Anker 9 in die Schließstellung bewegen. Für die Verursachung der Schließbewegung ist u. U. nur ein kurzer Stromimpuls erforderlich. Liegt der Anker 9 an dem Haftmagnet 8 an, ist u. U. lediglich ein Haltestrom zur Aufrechterhaltung der Schließstellung erforderlich, der um einen Faktor von mindestens fünf, mindestens zehn oder sogar mindestens 20 kleiner sein kann als der maximale Strom während des Stromimpulses für die Verursachung der Schließbewegung. In der Schließstellung (Fig. 4) liegt der Steuerventil-Ventilkörper 52 unter Abdichtung an dem Steuerventil-Ventilsitz 45 an. Somit ist trotz anstehenden Drucks in der Primärleitung 3 und trotz unter Umständen geöffneter Stellung des Überströmventils 5 ein Durchfluss durch die Agrarspritzen-Ventileinheit 1 unterbunden und insbesondere ein Austropfen unterbunden.
   Da mit elektrischer Beaufschlagung des Haftmagneten 8 das Steuerventil 6 die Schließstellung einnimmt, ohne elektrische Beaufschlagung des Haftmagneten 8 das Steuerventil 6 die Öffnungsstellung einnimmt, kann über die elektrische Beaufschlagung das Ausbringen des Fluids gesteuert werden. Möglich ist auch, dass über eine Pulsweitenmodulation, insbesondere die Wahl des Tastverhältnisses, eine Durchflussmengensteuerung erfolgt.
e) Bricht hingegen der Druck in der Primärleitung 3 ein, so dass der Druck kleiner wird als ein Schließdruck, der unter Umständen kleiner ist als der Öffnungsdruck des Überströmventils 5, nimmt das Überströmventil automatisch wieder die Schließstellung ein, womit unabhängig von der Betriebsstellung des Steuerventils 6 der Durchfluss gestoppt ist.

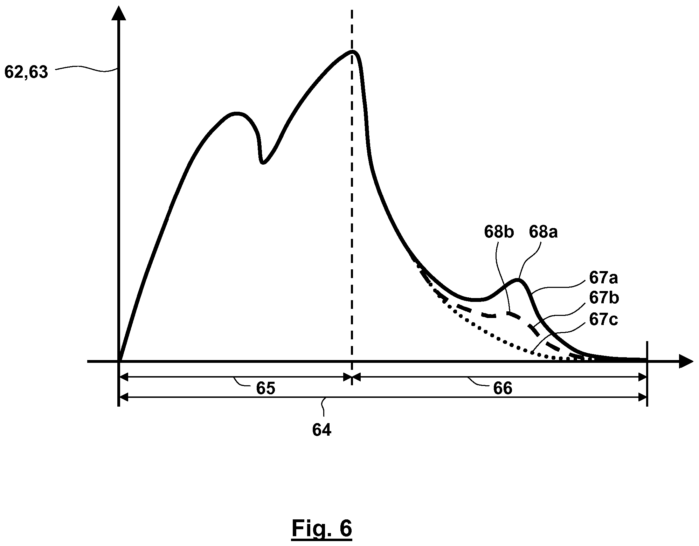

**Fig. 6** zeigt eine elektrische Beaufschlagung 62, hier einen Strom 63, mit dem die Spule 13 des Haftmagneten 8 beaufschlagt wird, während einer Periodendauer 64 der Pulsweitenmodulation. Die Periode 64 teilt sich auf in eine ON-Phase 65, in welcher die Steuereinheit 61 die erforderliche elektrische Beaufschlagung 62 auf die Spule 13 appliziert, sowie eine OFF-Phase 66, in welcher durch die Steuereinheit 61 die elektrische Beaufschlagung der Spule 13 beseitigt wird. Das Verhältnis der Dauer der ON-Phase 65 zur Periodendauer 64, welches zwischen 0 und 1 liegt, wird auch als Tastverhältnis bezeichnet. Für das dargestellte Ausführungsbeispiel beträgt das Tastverhältnis ca. 0,45. Angesichts des zwischen Anker 9 und Haftmagnet 8 wirkenden veränderlichen Flusses und der hervorgerufenen Induktion in der Spule 13 ergibt sich während der ON-Phase 65 und der OFF-Phase 66 der in Fig. 6 dargestellte Verlauf 67 des Stroms 63. Hierbei kennzeichnet der Verlauf 67a den Verlauf des Stroms 63 ohne eine Verstopfung bei der Ausbringung des Fluids, der Verlauf 67b den Verlauf des Stroms 63 bei einer geringeren Verstopfung bei der Ausbringung des Fluids und der Verlauf 67c des Strom 63 die Ausbringung des Fluids mit einer größeren oder vollständigen Verstopfung.

In Fig. 6 ist zu erkennen, dass sich der Verlauf während der OFF-Phase 66 signifikant je nach Ausmaß der Verstopfung verändert. So verfügen die nicht vollständig verstopften Verläufe 67a, 67b über einen Wendepunkt, während der Verlauf 67c für die vollständige Verstopfung keinen Wendepunkt aufweist. Der Verlauf 67a verfügt über ein ausgeprägteres Maximum 68a als das Maximum 68b des Verlaufs 67b, während der Verlauf 67c keinerlei Maximum aufweist. Aus einer Auswertung der Verläufe 67 kann somit darauf geschlossen werden, ob eine Verstopfung vorliegt oder nicht. Möglich ist sogar, dass (beispielsweise aus der Auswertung der Höhe des Maximums 68a, 68b) auf das Ausmaß der Verstopfung (oder auch eine Durchflussrate) rückgeschlossen wird und eine diesbezügliche Kenngröße ermittelt wird.

Der Öffnungsdruck des Überströmventils 5 liegt vorzugsweise oberhalb von 0.5 bar, 0.8 bar, 1.0 bar oder 1.2 bar. Möglich ist beispielsweise, dass der Öffnungsdruck des Überströmventils 5 im Bereich von 0.5 bar bis 2.0 bar, 0.8 bar bis 1.5 bar oder 1.0 bar bis 1.4 bar liegt.

Vorzugsweise wird die Agrarspritzen-Ventileinheit 1 so betrieben, dass das Steuerventil 6 nicht je nach Bestromung mehr oder weniger geöffnet wird. Vielmehr erfolgt eine elektrische Beaufschlagung des Aktuators 7 derart, dass ausschließlich eine vollständige Öffnungsstellung und eine vollständige Schließstellung eingenommen wird (mit der damit verbundenen Öffnungs-und Schließbewegung zwischen der Öffnungsstellung und der Schließstellung). Möglich ist, dass eine dauerhafte Ansteuerung der Öffnungsstellung und/oder der Schließstellung erfolgt. Möglich ist aber auch der Einsatz einer Pulsweitenmodulation mit einem dadurch bedingten Wechsel zwischen der Öffnungsstellung und der Schließstellung. Hierbei kann insbesondere eine Pulsweitenmodulation mit einer Frequenz von 25 Hz erfolgen.

Vorzugsweise erfolgt eine Öffnung des Steuerventils 6 mit einer Druckunterstützung durch das Fluid, womit eine schnelle Öffnungsbewegung erfolgen kann. Hierbei wird ausgenutzt, dass sich in der Schließstellung des Steuerventils 6 eingangsseitig von dem Steuerventil 6 ein Staudruck aufbaut, der höher ist als der ausgangsseitige Druck, woraus eine in Öffnungsrichtung wirkende Kraft resultiert. Hingegen erfolgt die Schließbewegung grundsätzlich gegen den Druck des Fluids. Möglich ist aber, dass die Druckdifferenz zwischen der Eingangsseite und der Ausgangsseite in der Öffnungsstellung infolge des in der Öffnungsstellung ermöglichten Druckausgleiches zumindest gemindert ist, sodass eine von dem Druck des Fluid erzeugte Kraft, welche der Schließbewegung entgegengesetzt ist, zumindest reduziert ist.

Möglich ist, dass für die Erkennung, ob die Agrarspritzen-Ventileinheit 1 ordnungsgemäß arbeitet und insbesondere keine Verstopfung derselben vorliegt, ein besonderer Testbetrieb des Aktuators 7 erfolgt. Beispielsweise kann gezielt eine Öffnung der Agrarspritzen-Ventileinheit 1 und eine anschließende Schließung der Agrarspritzen-Ventileinheit 1 ausgesteuert werden, wobei dann die Ströme oder Spannungen zur Auswertung, insbesondere zur Erkennung einer möglichen Verstopfung, herangezogen werden.

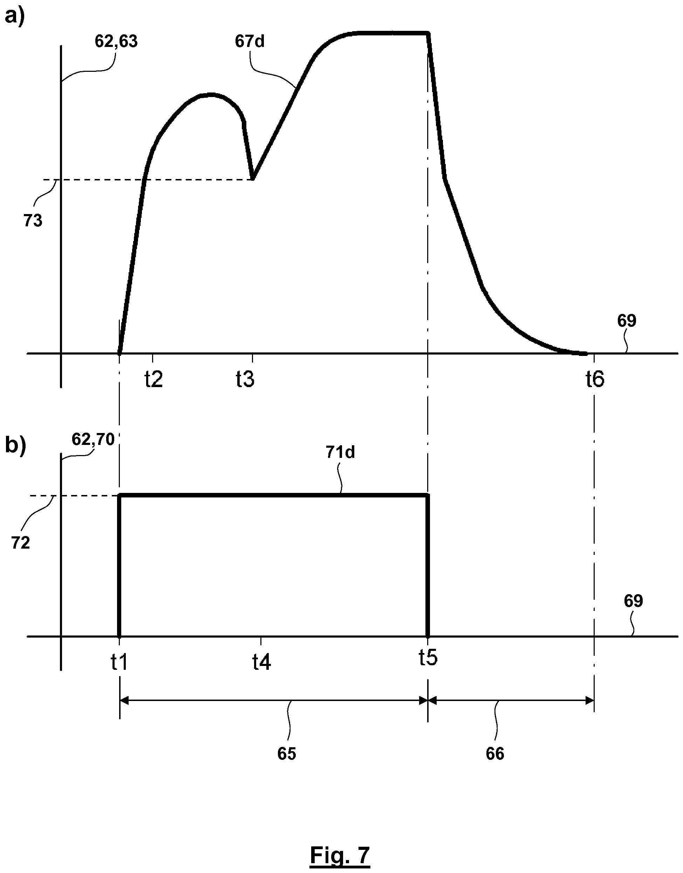

In den Fig. 7 bis 9 ist unter a) der Verlauf 67 der elektrischen Beaufschlagung 62 in Form des Stroms 63 über der Zeit 69 dargestellt, während unter b) der Verlauf 71 der elektrischen Beaufschlagung 62 in Form der Spannung 70 über der Zeit 69 dargestellt ist.

Die in den Fig. 7 bis 9 dargestellten Verläufe 67, 71 zwischen den Zeitpunkten t1 und t6 betreffen die Erzeugung einer Haltespannung 72 für eine Schließung des Haftmagneten 8 zu einem Zeitpunkt t1 aus einer Öffnungsstellung des Haftmagneten 8, die Verringerung des Luftspalts des Haftmagneten 8 ab einem Zeitpunkt t2, das Erreichen der Schließstellung zu einem Zeitpunkt t3, das Detektieren, das die Schließstellung erreicht ist zu einem Zeitpunkt t4, die Reduzierung der Spannung 70 auf 0 zu einem Zeitpunkt t5 zur erneuten Öffnung des Haftmagneten 8 und das Erreichen der Öffnungsstellung und u. U. auch Aufrechterhalten derselben bis zu einem Zeitpunkt t6. Hierbei gelten die dargestellten Verläufe zwischen den Zeitpunkten t1 und t6 beispielsweise während einer Pulsweitenmodulation, sodass an den Zeitpunkt t6 unmittelbar wieder ein erneuter Abschnitt entsprechend dem dargestellten Verlauf zwischen den Zeitpunkten t1 und t6 anschließt und durch die Wahl des Zeitpunkts t5 der Duty-Cycle vorgegeben wird. Möglich ist aber auch, dass vor dem Zeitpunkt t1 und/oder nach dem Zeitpunkt t6 der Haftmagnet 8 und das Steuerventil 6 in der Öffnungsstellung verbleiben, sodass eine individuelle Aussteuerung zur Herbeiführung der Schließstellung und auch Bemessung der Zeitspanne der Aufrechterhaltung der Schließstellung erfolgen kann. Beispielsweise kann gemäß den Verläufen nach den Fig. 7 bis 9 auch eine temporäre Schließung des Haftmagneten 8 und des Steuerventils 6 zu Testzwecken erfolgen, die einmalig oder auch wiederholt oder turnusgemäß herbeigeführt werden kann, um beispielsweise eine Verstopfung des Steuerventils 6 (und/oder der stromaufwärts und/oder stromabwärts angeordneten Strömungsquerschnitte) zu detektieren.

In **Fig. 7** ist der Anstieg des Stroms 63 ab dem Zeitpunkt t1 von 0 zu erkennen. Während zunächst der Strom 63 linear ansteigt, führt die Verringerung des Spaltes zu einer Verringerung der Steigung des Anstiegs des Stroms, bis ein Maximum erreicht ist. Hieran anschließend fällt der Strom 63 mit der Annäherung an die Schließstellung ab, bis zum Zeitpunkt t3 ein Schwellwert 73 des Stroms 63 erreicht ist. Da ab dem Zeitpunkt t3 der Spalt des Haftmagneten 8 geschlossen ist, steigt hieran anschließend der Verlauf 67d des Stroms 63 wieder linear bis zu einem asymptotischen Annähern an einen Sättigungswert an. Wird zum Zeitpunkt t5 zur Herbeiführung der Öffnungsstellung des Steuerventils 6 die Spannung 70 wieder auf 0 reduziert, fällt zunächst der Verlauf 67d des Strom 63 linear ab. Mit Auslösung der Bewegung des Haftmagneten 8 ändert sich die Steigung des Abfalls des Stroms 63 geringfügig und nähert sich dann asymptotisch an den Strom Null an.

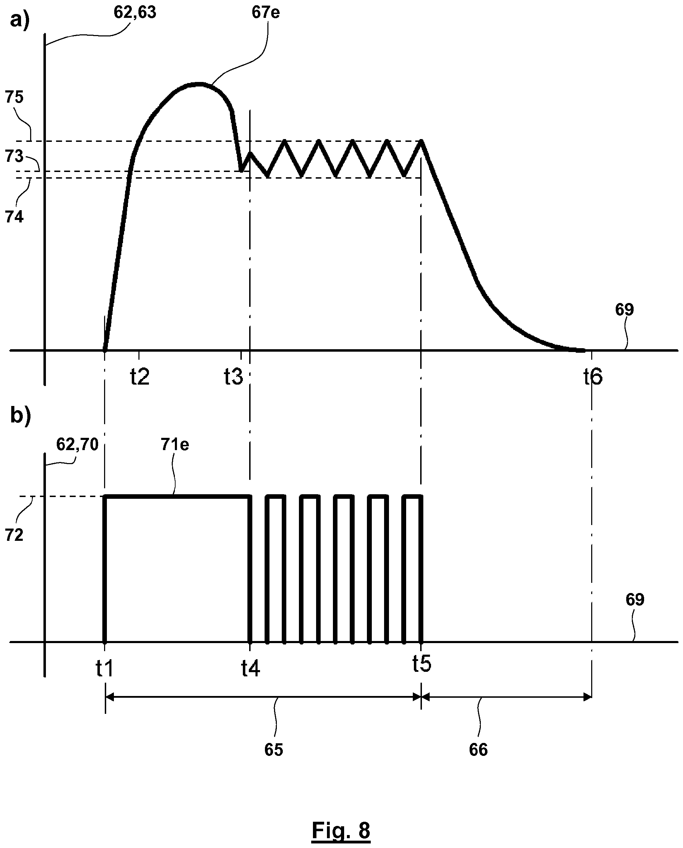

**Fig. 8** zeigt, dass in dem Zeitraum zwischen t3 und t5 die Schließstellung des Haftmagneten 8 und damit des Steuerventils 6 auch dann aufrechterhalten werden kann, wenn abweichend zu Fig. 7 in diesem Zeitraum die Spannung 70 nicht bei der Haltespannung 72 gehalten wird, sondern die Spannung 70 zwischen der Haltespannung 72, die ein Maximum bildet, und einer Spannung von Null, die damit ein Minimum bildet oszillierend mit konstanter Frequenz hin- und hergeschaltet wird, woraus das in Fig. 8b dargestellte Rechtecksignal in der Zeitspanne zwischen t4 und t5 resultiert.

Zunächst wird von einer Steuerlogik einer Steuereinheit zu einem Zeitpunkt t4 ermittelt, dass der Haftmagnet 8 und das Steuerventil 6 die Schließstellung erreicht haben. Im Idealfall ist t4 identisch mit t3, wobei aber für die Auswertung und die Signalverarbeitung durch die Steuereinheit unter Umständen auch eine kleine Zeitspanne zwischen t3 und t4 erforderlich ist. Mit dem Erkennen zum Zeitpunkt t4, dass die Schließstellung erreicht wird, löst die Steuerlogik der Steuereinheit das oszillierende Hin- und Herschalten der Spannung 70 aus. Die Reduzierung der Spannung 70 auf Null führt nicht unmittelbar zu einer Reduzierung des Stroms 63 gemäß dem Verlauf 67e. Vielmehr reduziert sich der Strom 63 mit einer verhältnismäßig kleinen Steigung, wofür die Ursache das in der Spule 13 mit dem Kern 14 des Haftmagneten 8 indizierte Gegenfeld sein kann. Die Frequenz der oszillierenden Hin- und Herschaltung der Spannung 70 ist dabei so bemessen, dass die sich aus den elektromagnetischen Größen des Haftmagneten 8 ergebende Steigung des Stroms 63 innerhalb der Abschaltdauer der Spannung zur Folge hat, dass der Strom 63 lediglich einen minimalen Strom 74 erreicht und nicht unterschreitet. Dieser minimale Strom 74 reicht (gerade noch) aus, um den Haftmagneten 8 und das Steuerventil 6 in der Schließstellung zu halten. Die rechtzeitige Erzeugung der Haltespannung 72 mit dem Erreichen des minimalen Stroms 74 führt dann dazu, dass der Strom 63 entsprechend dem Verlauf 67e wieder ansteigt. Dieser Anstieg erfolgt dann bis zu einem maximalen Strom 75. Mit dem Erreichen des maximalen Stroms 75 fällt dann die Spannung 70 gemäß dem Verlauf 71e wieder auf Null und der Vorgang kann sich dann mehrmals wiederholen. Das gemäß Fig. 8 eingesetzte Verfahren zur oszillierenden Reduzierung der Spannung 70 führt zu einer Verringerung der elektrischen Leistungsaufnahme des Steuerventils 6 in der Schließstellung desselben.

**Fig. 9** zeigt die Erzeugung eines Testsignals, um ermitteln zu können, ob das Steuerventil 6 (und/oder eine Ausbringdüse oder eine Sekundärleitung) verstopft ist. Hierzu wird, wie zuvor erläutert, zum Zeitpunkt t1 die Spannung 70 auf die Haltespannung 72 erhöht. Bis zum Zeitpunkt t4 entspricht der Verlauf 67f des Stroms 63 dem Verlauf 67e des Stroms 63 gemäß Fig. 8 und der Verlauf 71f der Spannung 70 entspricht dem Verlauf 71e der Spannung 70 gemäß Fig. 8. Wird aber zum Zeitpunkt t4 erkannt, dass die Schließstellung des Haftmagneten 8 und des Steuerventils 6 erreicht ist (oder für die Zeitspanne t3 bis t4 aufrechterhalten worden ist), wird sofort wieder die Spannung 70 gemäß dem Verlauf 71f auf Null reduziert, sodass sofort wieder die Öffnungsstellung herbei geführt wird und somit die Schließstellung des Steuerventils 6 so kurz wie möglich gehalten ist. Im theoretischen Idealfall wird der Spalt des Haftmagneten 8 für eine gegen Null gehende Zeitspanne geschlossen, sodass nahezu ununterbrochen Fluid aus dem Steuerventil 6 ausgebracht werden kann. Ziel der derart erzeugten Testsignals ist dann die Auswertung des Verlaufs 67f des Stroms 63 nach dem Zeitpunkt t4. Wie zuvor hinsichtlich des Ausführungsbeispiels gemäß Fig. 6 beschrieben worden ist, bildet sich für den mit durchgezogener Linie dargestellten Verlauf 67f mit nicht oder nur gering verstopften Steuerventil 6 ein Wendepunkt des Verlaufs 67f und/oder ein Maximum aus, während für den gestrichelt dargestellten Verlauf 67f dieser Wendepunkt oder das Maximum nicht mehr vorhanden sind. Der Betrag des Maximums und/oder das Ausmaß eines Wendepunktes kann somit dahingehend ausgewertet werden, ob eine Verstopfung vorliegt.

Ein Testsignal gemäß Fig. 9 kann turnusgemäß oder lediglich temporär ausschließlich zu diesen Testzwecken erzeugt werden. Möglich ist aber auch, dass die in Fig. 9 dargestellten Verläufe 67f, 71f zwischen den Zeitpunkten t1 und t6 Bestandteil eines pulsweitenmodulierten Signals sind, sodass ein Signal für die Auswertung verwendet werden kann, welches ohnehin in Folge der Pulsweitenmodulation zur Verfügung steht und nicht eine zusätzliche, an sich nicht erforderliche Schließung des Steuerventils 6 für die Überwachung der Verstopfung erforderlich ist.

Für die Erzeugung des Testsignals wird vorzugsweise die Zeitspanne der Schließung t1 bis t3 bzw. t1 bis t4 so kurz wie möglich gewählt, wobei diese vorzugsweise kleiner als 100msec, kleiner ist als 50 msec oder sogar kleiner ist als 45 msec.

### BEZUGSZEICHENLISTE

- 1: Agrarspritzen-Ventileinheit
- 2: Agrarspritzen-Ventileinrichtung
- 3: Primärleitung
- 4: Sekundärleitung
- 5: Überströmventil
- 6: Steuerventil
- 7: Aktuator
- 8: Haftmagnet
- 9: Anker
- 10: Ventilstößel
- 11: Topfmagnet
- 12: Aufnahmekörper
- 13: Spule
- 14: Kern
- 15: Durchlass
- 16: Kabel, Stecker
- 17: Öffnungsfeder
- 18: Gehäuse
- 19: Gehäuseteil
- 20: Gehäuseteil
- 21: Überwurfmutter
- 22: Innenraum
- 23: Anschluss, Durchlass
- 24: Gehäuseeinsatz
- 25: Gehäuseeinsatzteil
- 26: Gehäuseeinsatzteil
- 27: Ringbund
- 28: Führung
- 29: Bohrung
- 30: zylindrischer Fortsatz
- 31: Durchgangsbohrung
- 32: Führung
- 33: Dichtelement
- 34: Dichtelement
- 35: Kanal
- 36: Bohrung
- 37: Ringraum
- 38: Bohrung
- 39: Führung
- 40: Überströmventil-Ventilkörper
- 41: Dichtelement
- 42: Ringkanal
- 43: Ventilsitzkörper
- 44: Überströmventil-Ventilsitz
- 45: Steuerventil-Ventilsitz
- 46: Führung
- 47: Dichtelement
- 48: Schließfeder
- 49: Ringraum
- 50: Bohrung
- 51: Bohrung
- 52: Steuerventil-Ventilkörper
- 53: Ventilteller
- 54: Dichtelement
- 55: Dichtelement
- 56: Dichtelement
- 57: Dichtelement
- 58: Ringfläche
- 59: Befestigungsschraube
- 60: Durchgangsausnehmung
- 61: Steuereinheit
- 62: elektrische Beaufschlagung
- 63: Strom
- 64: Periodendauer
- 65: ON-Phase
- 66: OFF-Phase
- 67: Verlauf
- 68: Maximum
- 69: Zeit
- 70: Spannung
- 71: Verlauf
- 72: Haltespannung
- 73: Schwellwert
- 74: minimaler Strom
- 75: maximaler Strom

## Patentansprüche

1. Agrarspritzen-Ventileinheit (1) mit einer Primärleitung (3) und einer Sekundärleitung (4) und einem zwischen der Primärleitung (3) und der Sekundärleitung (4) angeordneten elektronisch gesteuerten Steuerventil (6), wobei
a) eine Ventilstellung des Steuerventils (6) über einen Haftmagneten (8) aufrecht erhalten und/oder verändert werden kann,
**dadurch gekennzeichnet, dass**
b) in Reihenschaltung zu dem elektronisch gesteuerten Steuerventil (6) ein passives Überströmventil (5) zwischen der Primärleitung (3) und der Sekundärleitung (4) angeordnet ist und
c) der Druck in der Primärleitung (3) in einer Schließstellung des Überströmventils (5) auf eine kleinere Ventilfläche des Überströmventils (5) wirkt als in einer Öffnungsstellung des Überströmventils (5).

2. Agrarspritzen-Ventileinheit (1) nach Anspruch 1, **dadurch gekennzeichnet, dass** das elektronisch gesteuerte Steuerventil (6) ohne elektrische Beaufschlagung des Haftmagneten (8) seine Öffnungsstellung einnimmt.

3. Agrarspritzen-Ventileinheit (1) nach einem der vorhergehenden Ansprüche, **dadurch gekennzeichnet, dass**
a) das elektronisch gesteuerte Steuerventil (6) einen Steuerventil-Ventilkörper (52) aufweist,
b) das Überströmventil (5) einen Überströmventil-Ventilkörper (40) aufweist und
c) ein gemeinsamer Ventilsitzkörper (43) sowohl den Steuerventil-Ventilsitz (45) des elektronisch gesteuerten Steuerventils (6), an dem der Steuerventil-Ventilkörper (52) in der Schließstellung des elektronisch gesteuerten Steuerventils (6) zu Anlage kommt, als auch den Überströmventil-Ventilsitz (44) des Überströmventils (5), an dem der Überströmventil-Ventilkörper (40) in der Schließstellung des Überströmventils (5) zu Anlage kommt, ausbildet.

4. Agrarspritzen-Ventileinheit (1) nach einem der vorhergehenden Ansprüche, **dadurch gekennzeichnet, dass** das Überströmventil (5) und das elektronisch gesteuerte Steuerventil (6) radial ineinander geschachtelt sind.

5. Agrarspritzen-Ventileinheit (1) nach einem der vorhergehenden Ansprüche, **dadurch gekennzeichnet, dass**
a) bei Rückbeziehung des Patentanspruchs auf Patentanspruch 1, 2 oder 4 ohne Rückbeziehung auf Patentanspruch 3 das Überströmventil (5) einen Überströmventil-Ventilkörper (40) aufweist, der eine Durchgangsausnehmung (60) aufweist, wobei ein Kanal (35) zwischen dem Überströmventil (5) und dem elektronisch gesteuerten Steuerventil (6) und/oder ein Bauelement des elektronisch gesteuerten Steuerventils (6) sich zumindest teilweise durch die Durchgangsausnehmung (60) erstrecken/erstreckt,
oder b) bei Rückbeziehung des Patentanspruchs auf Patentanspruch 3 oder 4 mit Rückbeziehung auf Patentanspruch 3 der Überströmventil-Ventilkörper (40) eine Durchgangsausnehmung (60) aufweist, wobei ein Kanal (35) zwischen dem Überströmventil (5) und dem elektronisch gesteuerten Steuerventil (6) und/oder ein Bauelement des elektronisch gesteuerten Steuerventils (6) sich zumindest teilweise durch die Durchgangsausnehmung (60) erstrecken/erstreckt.

6. Agrarspritzen-Ventileinheit (1) nach einem der vorhergehenden Ansprüche, **dadurch gekennzeichnet, dass** ein Gehäuse (18) mit einem Innenraum (22) vorhanden sind, wobei
a) der oder ein Überströmventil-Ventilkörper (40),
b) der oder ein Steuerventil-Ventilkörper (52) und
b) der oder mindestens ein Ventilsitzkörper (43), der den Überströmventil-Ventilsitz und/oder den Steuerventil-Ventilsitz bildet,
separat von dem Gehäuse (18) ausgebildet sind und im Innenraum (22) des Gehäuses (18) angeordnet sind.

7. Agrarspritzen-Ventileinrichtung (2) mit einer Agrarspritzen-Ventileinheit (1) nach einem der vorhergehenden Ansprüche, **dadurch gekennzeichnet, dass** eine Steuereinheit (61) mit Steuerlogik vorhanden ist, welche aus der elektrischen Beaufschlagung des Haftmagneten (8) mindestens eine Kenngröße ermittelt wird, die mit einem Durchfluss und/oder einem Ausmaß einer Verstopfung
a) der Agrarspritzen-Ventileinheit (1),
b) der Sekundärleitung (4) und/oder
c) einer Ausbringdüse
zumindest korreliert.

8. Agrarspritzen-Ventileinrichtung (2) nach Anspruch 7, **dadurch gekennzeichnet, dass** die Steuerlogik so ausgebildet ist, dass der Haftmagnet (8) mittels einer Pulsweitenmodulation elektrisch beaufschlagt wird und die Kenngröße auf Grundlage der elektrischen Beaufschlagung ermittelt wird,
wobei die Steuerlogik insbesondere so ausgebildet ist, dass die Kenngröße auf Grundlage der elektrischen Beaufschlagung
a) während der OFF-Phase (66) der Pulsweitenmodulation oder der Schließbewegung des elektronisch gesteuerten Steuerventils (6) oder
b) während der ON-Phase (66) der Pulsweitenmodulation oder der Öffnungsbewegung des elektronisch gesteuerten Steuerventils (6)
ermittelt wird.

9. Agrarspritzen-Ventileinrichtung (2) nach Anspruch 8, **dadurch gekennzeichnet, dass** die Steuerlogik so ausgebildet ist, dass die Kenngröße aus einem lokalen Maximum (68) der elektrischen Beaufschlagung
a) während der OFF-Phase (66) der Pulsweitenmodulation oder der Schließbewegung des elektronisch gesteuerten Steuerventils (6) oder
b) während der ON-Phase (66) der Pulsweitenmodulation oder der Öffnungsbewegung des elektronisch gesteuerten Steuerventils (6)
ermittelt wird.

10. Agrarspritzen-Ventileinrichtung (2) nach einem der Ansprüche 7 bis 9, **dadurch gekennzeichnet, dass** die Steuerlogik so ausgebildet ist, dass die Kenngröße für mehrere Zyklen der Pulsweitenmodulation ermittelt wird und aus einer Veränderung der Kenngröße auf eine Veränderung des Durchflusses und/oder eines Ausmaßes einer Verstopfung geschlossen wird.

11. Agrarspritzen-Ventileinrichtung (2) nach einem der Ansprüche 7 bis 10, **dadurch gekennzeichnet, dass** mehrere Agrarspritzen-Ventileinheiten (1) vorhanden sind, welchen jeweils einer Ausbringdüse zugeordnet sind, wobei die Agrarspritzen-Ventileinheiten (1) mit zugeordneten Ausbringdüsen an einem Sprühbalken gehalten sind und über eine Pumpe mit einem auszubringenden Fluid versorgt werden, und mindestens eine elektronische Steuereinheit (61) vorhanden ist, welche mindestens eine zugeordnete Agrarspritzen-Ventileinheit (1) ansteuert.

12. Agrarspritzen-Ventileinrichtung (2) nach einem der Ansprüche 7 bis 11, **dadurch gekennzeichnet, dass** die Steuerlogik
a) während eines Dauerbetriebs der Agrarspritzen-Ventileinheit (1) oder für einen Test- oder Referenzbetrieb in einer Öffnungsstellung sowohl des Steuerventils (6) als auch des passiven Überströmventils (5) das Steuerventil (6) temporär oder wiederholt in eine Schließstellung steuert und
b) eine elektrische Beaufschlagung (62) des Haftmagneten (8) ermittelt wird, die dann für die Ermittlung eines Durchfluss und/oder eines Ausmaßes einer Verstopfung der Agrarspritzen-Ventileinheit (1), der Sekundärleitung (4) und/oder einer Ausbringdüse berücksichtigt wird,
wobei die Steuereinheit insbesondere mehrere Agrarspritzen-Ventileinheiten (1) ansteuert und die Steuerlogik die Steuerventile (6) der Agrarspritzen-Ventileinheiten (1) zeitlich versetzt zu Test- oder Referenzzwecken in eine Schließstellung steuert.

13. Agrarspritzen-Ventileinrichtung (2) nach einem der Ansprüche 7 bis 12, **dadurch gekennzeichnet, dass** die Steuerlogik
a) in einem Referenzbetrieb das Steuerventil (6) in eine Schließstellung steuert,
b) die während des Referenzbetriebs erfasste elektrische Beaufschlagung (62) des Haftmagneten (8) als Referenzbeaufschlagung speichert,
c) in einem Testbetrieb das Steuerventil (6) in eine Schließstellung steuert und
d) ein Ausmaß einer Verstopfung der Agrarspritzen-Ventileinheit (1), der Sekundärleitung (4) und/oder einer Ausbringdüse ermittelt wird durch einen Vergleich der Referenzbeaufschlagung mit der während des Testbetriebs erfassten elektrischen Beaufschlagung.

14. Agrarspritzen-Ventileinrichtung (2) nach Anspruch 13, **dadurch gekennzeichnet, dass** ein Referenzbetrieb für unterschiedliche in der Primärleitung anliegende Drücke durchgeführt wird und mehrere druckabhängige Referenzbeaufschlagungen gespeichert werden und ein Ausmaß einer Verstopfung der Agrarspritzen-Ventileinheit (1), der Sekundärleitung (4) und/oder einer Ausbringdüse ermittelt wird durch einen Vergleich der Referenzbeaufschlagung für den Druck, der während des Testbetriebs in der Primärleitung angelegen hat, mit der während des Testbetriebs erfassten elektrischen Beaufschlagung.

15. Agrarspritzen-Ventileinrichtung (2) nach einem der Ansprüche 7 bis 14, **dadurch gekennzeichnet, dass** die Steuerlogik in einer Schließstellung des Steuerventils (6) die elektrische Beaufschlagung, insbesondere oszillierend zwischen einem Maximum und einem Minimum, variiert.

16. Agrarspritzen-Ventileinrichtung (2) nach einem der Ansprüche 7 bis 15, **dadurch gekennzeichnet, dass** die Steuerlogik
a) bei einer Überführung des Steuerventils (6) von einer Öffnungsstellung in eine Schließstellung den Verlauf des Stroms (63), mit dem der Haftmagnet (8) beaufschlagt wird, überwacht, und
b) der Zeitpunkt des Erreichens der Schließstellung des Steuerventils (6) aus dem Verlauf des Stroms (63), mit dem der Haftmagnet (8) beaufschlagt wird, ermittelt wird, indem
- eine Verringerung des Stroms (63) auf oder unter einen Schwellwert (73) detektiert wird und/oder ein anschließender Anstieg des Stroms (63) detektiert wird und/oder
- ein Wendepunkt des sich verringernden Stroms (63) detektiert wird und/oder
- eine Unstetigkeit des sich verringernden Stroms (63) detektiert wird.

## Claims

1. Agricultural sprayer valve unit (1) comprising a primary line (3) and a secondary line (4) and a control valve (6) which is controlled electronically and arranged between the primary line (3) and the secondary line (4), wherein
a) a valve position of the control valve (6) can be maintained and/or changed by a holding magnet (8),
**characterized in that**
b) a passive overflow valve is arranged in a series connection with the electronically controlled control valve (6) between the primary line (3) and the secondary line (4) and
c) the pressure in the primary line (3) biases a smaller valve area of the overflow valve (5) in a closed position of the overflow valve (5) than in an open position of the overflow valve (5).

2. Agricultural sprayer valve unit (1) of claim 1, **characterized in that** without an electrical bias of the holding magnet (8) the electronically controlled control valve (6) is moved into its open position or is in its open position.

3. Agricultural sprayer valve unit (1) of one of the preceding claims, **characterized in that**
a) the electronically controlled control valve (6) comprises a control valve valve body (52),
b) the overflow valve (5) comprises an overflow valve valve body (40) and
c) a common valve seat body (43) comprises both the control valve valve seat (45) of the electronically controlled control valve (6) which is contacted by the control valve valve body (52) in the closed position of the electronically controlled control valve (6) as well as the overflow valve valve seat (44) of the overflow valve (5) which is contacted by the overflow valve valve body (40) in the closed position of the overflow valve (5).

4. Agricultural sprayer valve unit (1) of one of the preceding claims, **characterized in that** the overflow valve (5) and the electronically controlled control valve (6) are nested radially into each other.

5. Agricultural sprayer valve unit (1) of one of the preceding claims, **characterized in that**
a) when the patent claim refers back to patent claim 1, 2 or 4 without referring back to claim 3 the overflow valve (5) comprises an overflow valve valve body (40) with a through recess (60), a channel (35) between the overflow valve (5) and the electronically controlled control valve (6) and/or a component of the electronically controlled control valve (6) extending at least partially through the through recess (60),
or b) when the patent claim refers back to claim 3 or 4 with a referral to patent claim 3 the overflow valve valve body (40) comprises a through recess (60), a channel (35) between the overflow valve (5) and the electronically controlled control valve (6) and/or a component of the electronically controlled control valve (6) at least partially extending through the through recess (60).

6. Agricultural sprayer valve unit (1) of one of the preceding claims, **characterized in that** a housing (18) comprising an inner chamber (22) is provided wherein
a) the or an overflow valve valve body (40),
b) the or a control valve valve body (52) and
b) the or at least one valve seat body (43) which comprises the overflow valve valve seat and/or the control valve valve seat
are formed separately from the housing (18) and are arranged in the inner chamber (22) of the housing (18).

7. Agricultural sprayer valve device (2) comprising an agricultural sprayer valve unit (1) of one of the preceding claims, **characterized in that** a control unit (61) is provided comprising control logic which determines from the electric bias of the holding magnet (8) at least one characteristic parameter which at least correlates with the flow and/or an extend of a clogging of
a) the agricultural sprayer valve unit (1),
b) the secondary line (4) and/or
c) an outlet nozzle.

8. Agricultural sprayer valve device (2) of claim 7, **characterized in that** the control logic is designed such that the holding magnet (8) is electrically biased by a pulse width modulation and the characteristic parameter is determined on the basis of the electric bias,
wherein the control logic is in particular designed such that the characteristic parameter is determined on the basis of the electric bias
a) during the OFF-phase (66) of the pulse width modulation or the closing movement of the electronically controlled control valve (6) or
b) during the ON-Phase (66) of the pulse width modulation or the opening movement of the electronically controlled control valve (6).

9. Agricultural sprayer valve device (2) of claim 8, **characterized in that** the control logic is designed such that the characteristic parameter is determined from a local maximum (68) of the electric bias
a) during the OFF-phase (66) of the pulse width modulation or the closing movement of the electronically controlled control valve (6) or
b) during the ON-phase (66) of the pulse width modulation or the opening movement of the electronically controlled control valve (6).

10. Agricultural sprayer valve device (2) of one of claims 7 to 9, **characterized in that** the control logic is designed such that the characteristic parameter is determined for a plurality of cycles of the pulse width modulation and a change of the characteristic parameter is considered as in indicator of a change of the flow and/or of an extend of a clogging.

11. Agricultural sprayer valve device (2) of one of claims 7 to 10, **characterized in that** a plurality of agricultural sprayer valve units (1) is provided which are each associated to a respective output nozzle, the agricultural sprayer valve units (1) with associated output nozzles being held by a spraying boom and being supplied by a pump with a fluid which is to be output, and at least one electronic control unit (61) is provided which controls at least one associated agricultural sprayer valve unit (1).

12. Agricultural sprayer valve device (2) of one of claims 7 to 11, **characterized in that** the control logic
a) during a permanent operation of the agricultural sprayer valve unit (1) or for a test operation or a reference operation in open positions of the control valve (6) and of the passive overflow valve (5) controls the control valve (6) temporally or repeatedly into a closed position and
b) determines an electric bias (62) of the holding magnet (8) which is then considered for determining a flow and/or an extend of a clogging of the agricultural sprayer valve unit (1), of the secondary line (4) and/or of an output nozzle,
wherein the control unit in particular controls a plurality of agricultural sprayer valve units (1) and the control logic controls the control valves (6) of the agricultural sprayer valve units (1) with an offset in time into a closed position for testing of referencing.

13. Agricultural sprayer valve device (2) of one of claims 7 to 12, **characterized in that** the control logic
a) in a reference operation controls the control valve (6) into a closed position,
b) stores the electric bias (62) of the holding magnet (8) sensed during the referencing operation as a reference bias,
c) in a test operation controls the control valve (6) into a closed position and
d) determines an extend of a clogging of the agricultural sprayer valve unit (1), of the secondary line (4) and/or of an output nozzle by a comparison of the reference bias with the electric bias sensed during the test operation.

14. Agricultural sprayer valve device (2) of claim 13, **characterized in that** a reference operation is executed for different pressures in the primary line and a plurality of reference biases depending on the pressure is stored and an extend of a clogging of the agricultural sprayer valve unit (1) of the secondary line (4) and/or an output nozzle is determined by a comparison of the reference bias for the pressure which was applied to the primary line during the test operation with the electric bias sensed during the test operation.

15. Agricultural sprayer valve device (2) of one of claims 7 to 14, **characterized in that** the control logic varies the electric bias in a closed position of the control valve (6), in particular in an oscillating fashion between a maximum and a minimum

16. Agricultural sprayer valve device (2) of one of claims 7 to 15, **characterized in that** the control logic
a) monitors the curve of the current (63) which biases the holding magnet (8) when transferring the control valve (6) from an open position into a closed position and
b) determines the point in time of the arrival in the closed position of the control valve (6) on the basis of the curve of the current (63) by which the holding magnet (8) is biased by
- detecting a reduction of the current (63) to or below a threshold (73) and/or detecting a subsequent increase of the current (63) and/or
- detecting a turning point of the reducing current (63) and/or
- detecting a discontinuity of the reducing current (63).

## Revendications

1. Unité de soupape de pulvérisation agricole (1) avec une conduite primaire (3) et une conduite secondaire (4) et une soupape de commande contrôlée électroniquement (6), disposée entre la conduite primaire (3) et la conduite secondaire (4), dans laquelle
a) une position de soupape de la soupape de commande (6) peut être maintenue et/ou modifiée par l'intermédiaire d'un aimant de fixation (8),
**caractérisée en ce que**
b) une soupape de décharge passive (5) est branchée en série à la soupape de commande contrôlée électroniquement (6), entre la conduite primaire (3) et la conduite secondaire (4) et
c) la pression dans la conduite primaire (3) agit, dans une position de fermeture de la soupape de décharge (5), sur une surface de soupape de la soupape de décharge (5) plus petite que dans une position d'ouverture de la soupape de décharge (5).

2. Unité de soupape de pulvérisation agricole (1) selon la revendication 1, **caractérisée en ce que** la soupape de commande contrôlée électroniquement (6) prend sa position d'ouverture lorsque l'aimant de fixation (8) n'est pas alimenté en courant.

3. Unité de soupape de pulvérisation agricole (1) selon l'une des revendications précédentes, **caractérisée en ce que**
a) la soupape de commande contrôlée électroniquement (6) comprend un corps de soupape de commande (52),
b) la soupape de décharge (5) comprend un corps de soupape de décharge (40) et
c) un corps de siège de soupape commun (43) constitue aussi bien le siège de soupape de commande (45) de la soupape de commande contrôlée électroniquement (6), contre lequel le corps de soupape de commande (52) s'appuie dans la position de fermeture de la soupape de commande contrôlée électroniquement (6), que le siège de soupape de décharge (44) de la soupape de décharge (5), contre lequel le corps de soupape de décharge (40) s'appuie dans la position de fermeture de la soupape de décharge (5).

4. Unité de soupape de pulvérisation agricole (1) selon l'une des revendications précédentes, **caractérisée en ce que** la soupape de décharge (5) et la soupape de commande contrôlée électroniquement (6) sont imbriquées radialement l'une dans l'autre.

5. Unité de soupape de pulvérisation agricole (1) selon l'une des revendications précédentes, **caractérisée en ce que**
a) si la revendication se réfère à la revendication 1, 2 ou 4, sans se référer à la revendication 3, la soupape de décharge (5) comprend un corps de soupape de décharge (40) qui présente un évidement de passage (60), dans lequel un canal (35) entre la soupape de décharge (5) et la soupape de commande contrôlée électroniquement (6) et/ou un composant de la soupape de commande contrôlée électroniquement (6) s'étend(ent) au moins partiellement à travers l'évidement de passage (60) ou
b) si la revendication se réfère à la revendication 3 ou 4, en se référant à la revendication 3, le corps de soupape de décharge (40) présente un évidement de passage (60), dans lequel un canal (35) entre la soupape de décharge (5) et la soupape de commande contrôlée électroniquement (6) et/ou un composant de la soupape de commande contrôlée électroniquement (6) s'étend(ent) au moins partiellement à travers l'évidement de passage (60).

6. Unité de soupape de pulvérisation agricole (1) selon l'une des revendications précédentes, **caractérisée en ce qu'**un boîtier (18) avec un espace interne (22) est prévu, dans laquelle
a) le ou un corps de soupape de décharge (40),
b) le ou un corps de soupape de commande (52) et
c) le ou au moins un corps de siège de soupape (43), qui constitue le siège de soupape de décharge et/ou le siège de soupape de commande,
sont réalisés séparément du boîtier (18) et sont disposés dans l'espace interne (22) du boîtier (18).

7. Dispositif à soupape de pulvérisation agricole (2) avec une unité de soupape de pulvérisation agricole (1) selon l'une des revendications précédentes, **caractérisé en ce qu'**une unité de commande (61) avec une logique de commande est prévue, qui détermine, à partir de l'alimentation électrique de l'aimant de fixation (8), au moins une grandeur caractéristique qui est corrélée au moins avec un débit et/ou une étendue d'un colmatage
a) de l'unité de soupape de pulvérisation agricole (1),
b) de la conduite secondaire (4) et/ou
c) d'une buse de sortie.

8. Dispositif à soupape de pulvérisation agricole (2) selon la revendication 7, **caractérisé en ce que** la logique de commande est conçue de sorte que l'aimant de fixation (8) est alimenté électriquement au moyen d'une modulation de largeur d'impulsion et la grandeur caractéristique est déterminée sur la base de l'alimentation électrique,
dans lequel la logique de commande est plus particulièrement conçue de sorte que la grandeur caractéristique est déterminée sur la base de l'alimentation électrique
a) pendant la phase OFF (66) de la modulation de largeur d'impulsion ou le mouvement de fermeture de la soupape de commande contrôlée électroniquement (6) ou
b) pendant la phase ON (66) de la modulation de largeur d'impulsion ou le mouvement d'ouverture de la soupape de commande contrôlée électroniquement (6).

9. Dispositif à soupape de pulvérisation agricole (2) selon la revendication 8, **caractérisé en ce que** la logique de commande est conçue de sorte que la grandeur caractéristique est déterminée à partir d'un maximum local (68) de l'alimentation électrique
a) pendant la phase OFF (66) de la modulation de largeur d'impulsion ou le mouvement de fermeture de la soupape de commande contrôlée électroniquement (6) ou
b) pendant la phase ON (66) de la modulation de largeur d'impulsion ou le mouvement d'ouverture de la soupape de commande contrôlée électroniquement (6).

10. Dispositif à soupape de pulvérisation agricole (2) selon l'une des revendications 7 à 9, **caractérisé en ce que** la logique de commande est conçue de sorte que la grandeur caractéristique est déterminée pour plusieurs cycles de la modulation de largeur d'impulsion et une variation de la grandeur caractéristique permet de déduire une variation du débit et/ou d'une étendue d'un colmatage.

11. Dispositif à soupape de pulvérisation agricole (2) selon l'une des revendications 7 à 10, **caractérisé en ce que** plusieurs unités de soupapes de pulvérisation agricole (1) sont prévues, qui correspondent chacune à une buse de sortie, dans lequel les unités de soupapes de pulvérisation agricole (1) avec les buses de sortie correspondantes sont maintenues sur une barre de pulvérisation et sont alimentées par l'intermédiaire d'une pompe avec un fluide à pulvériser, et au moins une unité de commande électronique (61) est prévue, qui contrôle au moins une unité de soupape de pulvérisation agricole (1) correspondante.

12. Dispositif à soupape de pulvérisation agricole (2) selon l'une des revendications 7 à 11, **caractérisé en ce que** la logique de commande
a) contrôle, pendant un fonctionnement en continu de l'unité de soupape de pulvérisation agricole (1) ou pour un fonctionnement de test ou de référence, dans une position d'ouverture, aussi bien de la soupape de commande (6) que de la soupape de décharge passive (5), la soupape de commande (6), de manière temporaire ou répétée afin de la mettre dans une position de fermeture et
b) une alimentation électrique (62) de l'aimant de fixation (8) est déterminée, qui est ensuite prise en compte pour la détermination d'un débit et/ou d'une étendue d'un colmatage de l'unité de soupape de pulvérisation agricole (1), de la conduite secondaire (4) ou d'une buse de sortie,
dans lequel l'unité de commande contrôle plus particulièrement plusieurs unités de soupapes de pulvérisation agricole (1) et la logique de commande contrôle les soupapes de commande (6) des unités de soupapes de pulvérisation agricole (1) de manière décalée dans le temps à des fins de test ou de référence, afin de la mettre dans une position de fermeture.

13. Dispositif à soupape de pulvérisation agricole (2) selon l'une des revendications 7 à 12, **caractérisé en ce que** la logique de commande
a) contrôle, dans un fonctionnement de référence, la soupape de commande (6) afin de la mettre dans une position de fermeture,
b) enregistre l'alimentation électrique (62) de l'aimant de fixation (8), mesurée pendant le fonctionnement de référence, en tant qu'alimentation de référence,
c) contrôle, dans un fonctionnement de test, la soupape de commande (6) afin de mettre dans une position de fermeture et
d) une étendue d'un colmatage de l'unité de soupape de pulvérisation agricole (1), de la conduite secondaire (4) et/ou d'une buse de sortie est déterminée grâce à une comparaison de l'alimentation de référence avec l'alimentation électrique mesurée pendant le fonctionnement de test.

14. Dispositif à soupape de pulvérisation agricole (2) selon la revendication 13, **caractérisé en ce qu'**un fonctionnement de référence est exécuté pour différentes pressions dans la conduite primaire et plusieurs alimentations de référence sont enregistrées en fonction de la pression et une étendue d'un colmatage de l'unité de soupape de pulvérisation agricole (1), de la conduite secondaire (4) et/ou d'une buse de sortie est déterminée grâce à une comparaison de l'alimentation de référence pour la pression qui a été appliquée pendant le fonctionnement de test dans la conduite primaire avec l'alimentation électrique mesurée pendant le fonctionnement de test.

15. Dispositif à soupape de pulvérisation agricole (2) selon l'une des revendications 7 à 14, **caractérisé en ce que** la logique de commande fait varier, dans une position de fermeture de la soupape de commande (6), l'alimentation électrique, plus particulièrement de manière oscillante entre un maximum et un minimum.

16. Dispositif à soupape de pulvérisation agricole (2) selon l'une des revendications 7 à 15, **caractérisé en ce que** la logique de commande
a) surveille, lors d'un passage de la soupape de commande (6) d'une position d'ouverture vers une position de fermeture, l'évolution du courant (63) avec lequel l'aimant de fixation (8) est alimenté et
b) le moment où la position de fermeture de la soupape de commande (6) est atteinte est déterminé à partir de l'évolution du courant (63) avec lequel l'aimant de fixation (8) est alimenté, de la manière suivante :
- une diminution du courant (63) à ou en dessous d'une valeur seuil (73) est détectée et/ou une augmentation suivante du courant (63) est détectée et/ou
- un point d'inflexion du courant (63) en diminution est détecté et/ou
- une instabilité du courant (63) en diminution est détectée.
